# DEMANDE DE BREVET EUROPEEN

(11) **EP 4 242 101 A1**
(43) Date de publication de la demande: **13.09.2023**
(21) Numéro de dépôt: 23160224.4
(22) Date de dépôt: 06.03.2023
(51) Int. Cl.: B64C 13/04

(54) **BÂTI DE PALONNIER D'AÉRONEF**

(30) Priorité: 07.03.2022 FR 2201930
(71) Demandeur: Dassault Aviation, 75008 Paris (FR)
(72) Inventeur: GRANIER, Eric, 92214 SAINT CLOUD (FR); MATEUS, Vincent, 92214 SAINT CLOUD (FR)
(74) Mandataire: Lavoix

(57) **Abrégé**

L'invention concerne un bâti (28) de palonnier comprenant un socle (150), une ossature de support (152) et des interfaces de raccordement (154A, 154B, 154C), chaque interface de raccordement (154A, 154B, 154C) étant propre à raccorder une autre pièce du palonnier au bâti (28).

L'ossature de support (152) relie chaque interface de raccordement (154A, 154B, 154C) au socle (150), l'ossature de support (152) comprenant des éléments d'ossature (164) agencés en treillis (166), au moins un des éléments d'ossature (164) s'étendant à partir de chaque interface de raccordement (154A, 154B, 154C).

## Description

La présente invention concerne un bâti de palonnier d'aéronef.

En aéronautique, le palonnier est l'une des principales commandes de vol située dans le poste de pilotage de l'aéronef. Il comprend habituellement deux pédales permettant au pilote d'actionner la gouverne de direction de l'aéronef pour commander l'aéronef sur l'axe de lacet.

Certains palonniers permettent aussi au pilote de commander un freinage de l'aéronef.

Cependant, les palonniers connus, et en particulier le cas échéant les bâtis de ces palonniers, ne permettent pas une adaptabilité de l'ergonomie pour une large gamme de tailles de pilote de l'aéronef.

En effet, les courses de réglage des positions d'utilisation des pédales sont limitées. De plus, dans certaines positions réglées, les pédales peuvent présenter une inclinaison et/ou une hauteur non adaptées à la morphologie des pieds de certaines tailles de pilotes. Ceci peut engendrer des difficultés aux pilotes pour appréhender la zone d'appui des pieds selon les fonctions recherchées.

Un but de l'invention est alors de fournir un bâti de palonnier permettant d'intégrer les nombreuses fonctions du palonnier, capable de résister aux efforts de dimensionnement et d'utilisation en fonctionnement, assez léger pour ne pas dépasser l'allocation massique du palonnier, et suffisamment compacte pour respecter l'encombrement alloué dans l'aéronef.

De plus, il serait avantageusement souhaitable que le bâti permette un montage facilité dans l'aéronef.

L'invention porte alors sur un bâti de palonnier comprenant un socle, une ossature de support et des interfaces de raccordement, chaque interface de raccordement étant propre à raccorder une autre pièce du palonnier au bâti, l'ossature de support reliant chaque interface de raccordement au socle, l'ossature de support comprenant des éléments d'ossature agencés en treillis, au moins un des éléments d'ossature s'étendant à partir de chaque interface de raccordement.

Le bâti selon l'invention peut comprendre l'une ou plusieurs des caractéristiques suivantes, prise(s) isolément ou suivant toute combinaison techniquement possible :
- le treillis comprend des noeuds au niveau respectivement desquels au moins deux des éléments d'ossature concourent, chaque élément d'ossature s'étendant le long d'une directrice depuis un des noeuds, une des interfaces de raccordement ou le socle, jusqu'à un autre des noeuds, une autre des interfaces de raccordement ou le socle ;
- les éléments d'ossature de l'ossature de support comprennent des éléments d'ossature de soutien et des éléments d'ossature de contreventement ; chaque élément d'ossature de soutien s'étendant le long de la directrice entre deux extrémités, et, pour chaque interface de raccordement, au moins un des éléments d'ossature de soutien s'étendant à partir de l'interface de raccordement et transmettant au socle la charge de l'interface de raccordement ; chaque élément d'ossature de contreventement concourant avec au moins un des éléments d'ossature de soutien au niveau d'un noeud disposé entre les deux extrémités de l'élément d'ossature de soutien ;
- le treillis comprend deux demi-treillis latéraux, les demi-treillis latéraux étant respectivement formés par une partie des éléments d'ossature et étant disposés de part et d'autre d'un plan médian longitudinal du bâti, les demi-treillis latéraux étant reliés latéralement l'un à l'autre par au moins un des éléments d'ossature de contreventement ;
- le socle comprend au moins deux demi-socles, les deux demi-socles étant séparés et à distance l'un de l'autre, demi-socles étant disposés de part et d'autre d'un plan médian longitudinal du bâti ;
- au moins 50%, de préférence au moins 75%, des éléments d'ossature sont allongés ;
- le treillis comprend des noeuds au niveau respectivement desquels au moins deux des éléments d'ossature concourent ; et, dans le treillis, au moins 50%, de préférence au moins 75%, des noeuds sont répartis selon un agencement spatial symétrique, l'agencement spatial symétrique présentant un plan de symétrie correspondant de préférence à un plan médian longitudinal du bâti ;
- chaque interface de raccordement est mâle ou femelle, chaque interface de raccordement étant propre à être insérée dans un élément distinct ou propre à recevoir un élément distinct pour raccorder la pièce du palonnier associée au bâti ;
- chaque interface de raccordement comprend au moins une région de fixation, la région de fixation délimitant au moins un orifice de réception d'un organe de fixation ;
- le socle, les interfaces de raccordement et l'ossature de support sont formés d'un seul tenant, l'ensemble du socle, des interfaces de raccordement et de l'ossature de support étant intégralement réalisé en un matériau prédéterminé et étant de préférence formé par une superposition de couches dudit matériau prédéterminé, le matériau prédéterminé étant avantageusement de l'aluminium ou un alliage d'aluminium ;
- les interfaces de raccordement comprennent au moins deux interfaces pédales, chaque interface pédale correspondant à une interface de raccordement d'une structure articulée de support de pédale du palonnier, les deux interfaces pédales étant disposées de part et d'autre du plan médian longitudinal du bâti ;
- les interfaces de raccordement comprennent au moins une interface capteur correspondant à une interface de raccordement d'un système d'acquisition lacet du palonnier configuré pour générer un signal électrique représentatif du déplacement de pédales du palonnier par rapport au bâti ; et, pour au moins une des interfaces pédales, un des éléments d'ossature relie de préférence ladite interface pédale à l'interface capteur en s'étendant depuis ladite interface pédale jusqu'à l'interface capteur ;
- les interfaces de raccordement comprennent au moins une interface de réglage correspondant à une interface de raccordement d'un système de réglage ergonomique d'une position d'utilisation de pédales du palonnier ;
- l'interface de réglage fait saillie hors de l'aplomb du socle, l'interface de réglage étant reliée au socle par au moins deux éléments d'ossature de soutien propre à transmettre au socle la charge portée par l'interface de réglage ; et
- l'ossature de support délimite un passage fonctionnel central, ledit passage fonctionnel central autorisant le passage d'au moins un cylindre d'un diamètre supérieur ou égal à 100 mm.

De plus, l'invention concerne un palonnier comprenant un bâti tel que décrit ci-dessus.

En outre, l'invention concerne un aéronef comprenant un bâti de palonnier ou un palonnier tel que décrit ci-dessus.

L'invention concerne également un procédé de fabrication d'un bâti tel que décrit ci-dessus.

Le procédé de fabrication comprend de préférence une étape de fabrication additive de l'ossature de support du bâti, avantageusement par fusion sélective par laser.

L'invention sera mieux comprise à la lecture de la description qui va suivre, donnée uniquement à titre d'exemple, et faite en se référant au dessin annexé, sur lequel :
La figure 1 est une vue schématique d'un exemple d'aéronef selon l'invention ;
La figure 2 est une vue schématique en perspective d'un exemple de dispositif de commande de l'aéronef de la figure 1 ;
Les figures 3 et 4 sont des vues schématiques respectivement de face et de côté d'un palonnier du dispositif de commande de la figure 2 ;
Les figures 5 et 6 sont des coupes schématiques en perspective du palonnier ;
La figure 7 est une vue schématique en perspective d'un système de freinage du palonnier ;
La figure 8 est une coupe schématique en perspective du système de freinage de la figure 7 ;
Les figures 9 et 10 sont des vues schématiques en perspectives du bâti de palonnier seul.

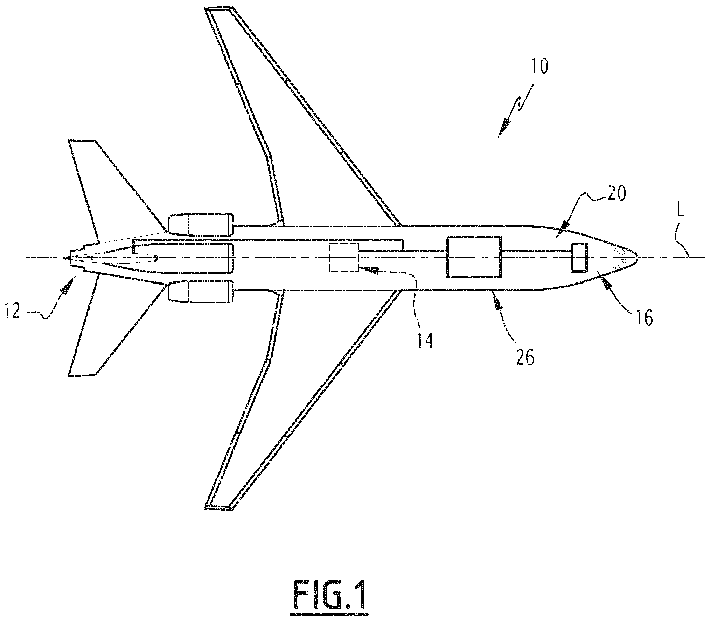

Un exemple d'aéronef 10 est illustré sur la figure 1.

L'aéronef 10 comporte au moins une gouverne de direction 12, propre à produire un mouvement de lacet de l'aéronef 10.

L'aéronef 10 comprend aussi au moins un train d'atterrissage 14 de l'aéronef 10, le train d'atterrissage 14 comprenant des roues et des freins propres à freiner lesdites roues.

Ici et pour la suite, on définit :
- une direction longitudinale X1 qui est parallèle à un axe longitudinal L de l'aéronef 10 ;
- une direction verticale Z1 qui forme avec la direction longitudinale X1 un plan vertical qui est parallèle à un plan vertical de symétrie de l'aéronef 10, la direction verticale Z1 étant orthogonale à la direction longitudinale X1 ; et
- une direction latérale Y1 qui est orthogonale auxdites directions longitudinale X1 et verticale Z1.

Les termes « arrière » et « avant » seront alors compris par rapport à la direction longitudinale X1, à savoir pour « avant » vers l'avant de l'aéronef 10 dans le sens d'un vol de l'aéronef 10, et pour « arrière » vers l'arrière de l'aéronef 10 dans le sens inverse au sens d'un vol de l'aéronef 10.

L'aéronef 10 comprend un cockpit 16 destiné de préférence à recevoir au moins deux pilotes. Le cockpit 16 comprend en particulier un siège de pilotage pour chaque pilote.

L'aéronef 10 comporte par exemple un système d'affichage comprenant un écran, l'écran étant de préférence disposé dans le cockpit 16 à destination des pilotes.

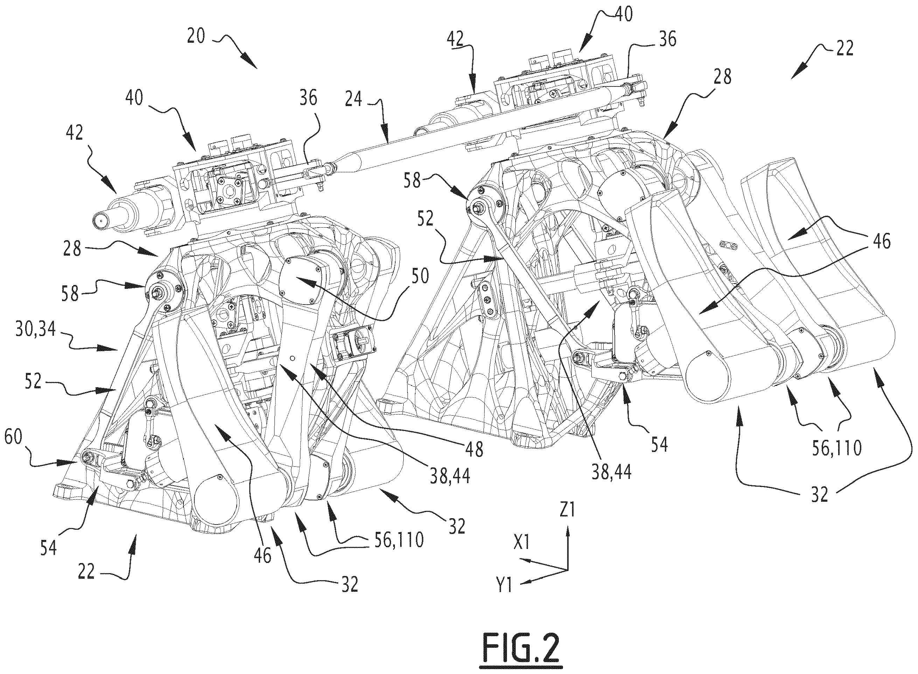

L'aéronef 10 comprend un dispositif de commande 20 illustré en particulier sur la figure 2.

Le dispositif de commande 20 comprend dans cet exemple au moins deux palonniers 22, et une bielle principale de liaison 24 raccordant les deux palonniers 22.

Le dispositif de commande 20 comprend de préférence aussi une unité de traitement 26 visible sur la figure 1, l'unité de traitement 26 étant propre à mettre en oeuvre les fonctions de commande de l'angle de lacet et/ou de freinage.

En effet, comme cela sera décrit plus en détails par la suite, chaque palonnier 22 est de préférence propre à être actionné pour permettre au pilote de commander l'angle de lacet de l'aéronef 10 au cours d'un vol, en contrôlant notamment la gouverne de direction 12. De plus, chaque palonnier 22 est avantageusement propre à être actionné pour permettre au pilote de commander le freinage de l'aéronef 10, lorsque les roues de l'aéronef 10 sont en contact avec le sol, en contrôlant notamment les freins du train d'atterrissage 14.

Chaque palonnier 22 du dispositif de commande 20 est disposé dans le cockpit 16 de l'aéronef 10. En particulier, chaque palonnier 22 est disposé en face d'un des sièges de sorte que le pilote assis sur le siège puisse actionner le palonnier 22.

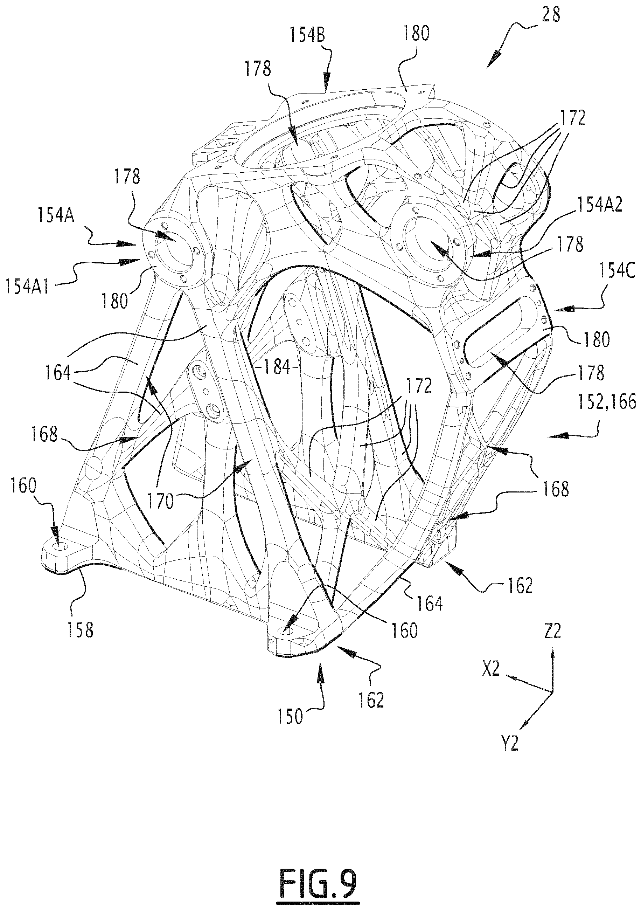

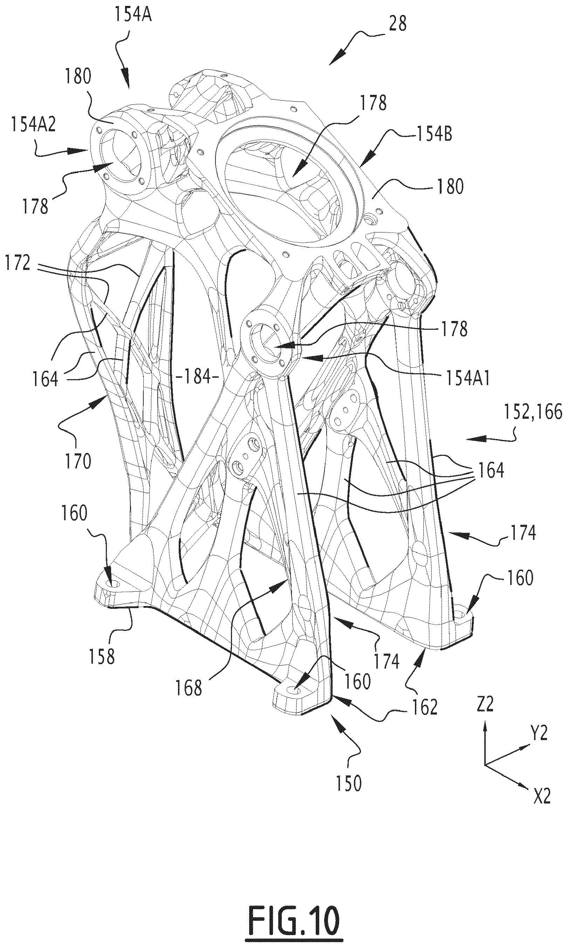

Chaque palonnier 22 comprend un bâti 28, dont un mode de réalisation préféré non limitatif sera décrit plus en détails en regard des figures 9 et 10.

Chaque palonnier 22 comprend au moins un système latéral pédalier 30, chaque système latéral pédalier 30 comprenant une pédale 32 et une structure articulée de support 34 de la pédale 32 connectant la pédale 32 au bâti 28.

Chaque palonnier 22 comprend aussi un arbre de sortie 36, et une chaîne cinématique mécanique 38 de transmission à l'arbre de sortie 36 d'un déplacement des pédales 32 par rapport au bâti 28, pour transmettre une commande de lacet du pilote vers l'arbre de sortie 36.

Les arbres de sortie 36 des deux palonniers 22 sont raccordés l'un à l'autre par l'intermédiaire de la bielle principale de liaison 24.

Chaque palonnier 22 comprend en outre avantageusement un système d'acquisition lacet 40.

De plus, chaque palonnier 22 comprend de préférence un système de restitution d'effort lacet 42.

Chaque palonnier 22 comprend avantageusement aussi un système de réglage ergonomique 44 d'une position d'utilisation des pédales 32 par rapport au bâti 28.

Comme indiqué ci-dessus, chaque système latéral pédalier 30 comprend la pédale 32 et la structure articulée de support 34 de la pédale 32.

Comme illustré sur les figures 2 à 4, chaque palonnier 22 comprend de préférence deux systèmes latéraux pédaliers 30. Les structures articulées de support 34 des deux systèmes latéraux pédaliers 30 sont alors disposées de part et d'autre du bâti 28.

Chaque système latéral pédalier 30 va maintenant être décrit plus en détails.

La pédale 32 comprend au moins une paroi d'appui 46 d'un pied de pilote.

La pédale 32 présente un contour extérieur entourant la paroi d'appui 46.

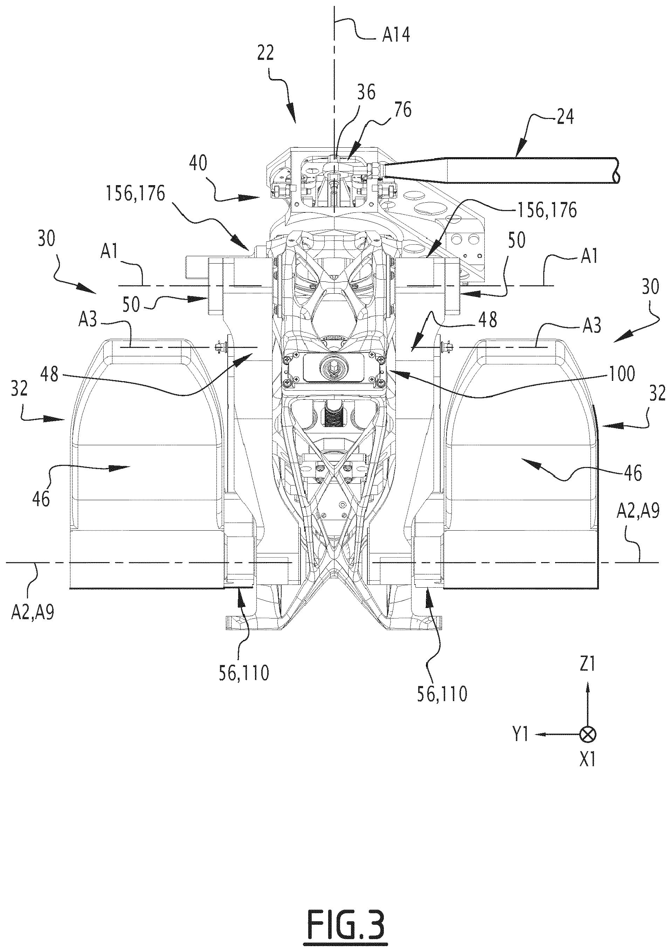

Comme illustré sur la figure 3, la paroi d'appui 46 est par exemple pleine, la surface de la paroi d'appui 46 correspondant alors à toute l'aire délimitée par ledit contour extérieur. En variante, la paroi d'appui 46 est ajourée.

Comme illustré sur les figures 3 à 5, la structure articulée de support 34 de la pédale 32 comprend au moins une manivelle 48.

Le déplacement de la pédale 32 par rapport au bâti 28 est autorisé au moins par ladite manivelle 48.

Ainsi, la manivelle 48 présente d'une part une première liaison pivot d'articulation 50 avec le bâti 28 et est raccordée d'autre part à la pédale 32. Le raccordement de la manivelle 48 à la pédale 32 est de préférence une liaison pivot de freinage, comme décrit plus en détails par la suite.

Par « liaison pivot d'articulation entre deux organes », on entend ici et par la suite tout système autorisant une liberté de rotation entre les deux organes selon un seul axe. De manière non limitatif, un tel système comprend par exemple une pièce rectiligne d'axe autour de laquelle tourne une ou plusieurs autres pièces du système, la pièce rectiligne d'axe définissant l'axe de rotation de la liaison. Un tel système comprend aussi en complément ou en variante au moins un roulement et/ou au moins un palier.

Par l'intermédiaire de la première liaison pivot d'articulation 50, la manivelle 48 est propre à être mise en rotation par rapport au bâti 28 par un déplacement de ladite pédale 32 par rapport au bâti 28. La rotation est alors selon un axe de rotation A1 passant par la première liaison pivot d'articulation 50 de la manivelle 48 avec le bâti 28.

En particulier, lorsque le pilote appuie sur la pédale 32 au droit du raccordement de la manivelle 48 à la pédale 32, le déplacement de la pédale 32 entraine conjointement la manivelle 48 en rotation par rapport au bâti 28 selon l'axe de rotation A1.

Un tel déplacement conjoint de la pédale 32 et de la manivelle 48 par rapport au bâti 28 selon l'axe de rotation A1 correspond par exemple à une rotation du pied du pilote autour de son genou.

Un tel déplacement conjoint de la pédale 32 et de la manivelle 48 par rapport au bâti 28 selon l'axe de rotation A1 est destiné à commander l'angle de lacet, par l'intermédiaire de la chaîne cinématique mécanique 38, le système d'acquisition lacet 40, et l'unité de traitement 26 comme expliqué plus en détails par la suite.

Dans l'exemple des figures 3 à 5, la manivelle 48 s'étend, entre la première liaison pivot d'articulation 50 et le raccordement à la pédale 32, suivant une courbe directrice. De préférence, la courbe directrice est droite, en vue projetée sur un plan perpendiculaire à l'axe de rotation A1. Alternativement, cette courbe directrice est courbée en vue projetée sur un plan perpendiculaire à l'axe de rotation A1, la manivelle 48 étant, en d'autres termes, courbée.

Dans un mode de réalisation préféré de l'invention, la structure articulée de support 34 de la pédale 32 comprend en outre un levier 52 et une bielle de support 54.

Le déplacement de la pédale 32 par rapport au bâti 28 autour de l'axe de rotation A1 est alors autorisé au moins par l'ensemble formé par la manivelle 48, la bielle de support 54 et le levier 52, lorsque le pilote appuie sur la pédale 32.

La manivelle 48 présente dans cet exemple une deuxième liaison pivot d'articulation 56 avec la bielle de support 54.

En d'autres termes, la manivelle 48 est propre à être mise en rotation par rapport à la bielle de support 54 autour d'un axe de rotation A2 passant par la deuxième liaison pivot d'articulation 56 de la manivelle 48 avec la bielle de support 54.

L'axe de rotation A1 de la manivelle 48 par rapport au bâti 28 est parallèle à l'axe de rotation A2 de la manivelle 48 par rapport à la bielle de support 54.

La distance entre l'axe de rotation A1 de la manivelle 48 par rapport au bâti 28 et l'axe de rotation A2 de la manivelle 48 par rapport à la bielle de support 54 reste constante lors de tout déplacement de la pédale 32 par rapport au bâti 28. Par exemple, la manivelle 48 est ainsi rigide et indéformable.

Le levier 52 présente une première liaison pivot d'articulation 58 avec le bâti 28 et une deuxième liaison pivot d'articulation 60 avec la bielle de support 54.

En d'autres termes, le levier 52 est propre à être mis en rotation par rapport au bâti 28 autour d'un axe de rotation A3 passant par la première liaison pivot d'articulation 58 du levier 52 avec le bâti 28. De plus, le levier 52 est propre à être mis en rotation par rapport à la bielle de support 54 autour d'un axe de rotation A4 passant par la deuxième liaison pivot d'articulation 60 du levier 52 avec la bielle de support 54.

L'axe de rotation A3 du levier 52 par rapport au bâti 28 est parallèle à l'axe de rotation A4 du levier 52 par rapport à la bielle de support 54.

De plus, l'axe de rotation A3 du levier 52 par rapport au bâti 28 est parallèle à l'axe de rotation A1 de la manivelle 48 par rapport au bâti 28.

La distance entre l'axe de rotation A3 du levier 52 par rapport au bâti 28 et l'axe de rotation A4 du levier 52 par rapport à la bielle de support 54 reste constante lors de tout déplacement de la pédale 32 par rapport au bâti 28. Par exemple, le levier 52 est ainsi rigide et indéformable.

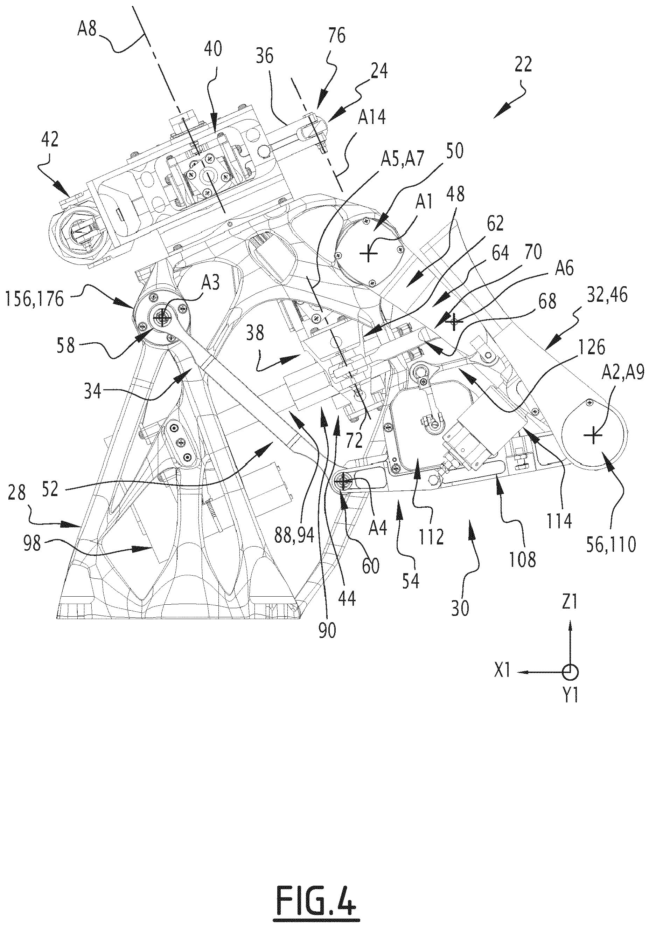

Dans l'exemple de la figure 4, le levier 52 s'étend, entre la première liaison pivot d'articulation 58 avec le bâti 28 et la deuxième liaison pivot d'articulation 60 avec la bielle de support 54, suivant une courbe directrice. De préférence, la courbe directrice est droite, en vue projetée sur un plan perpendiculaire à l'axe de rotation A1. Alternativement, cette courbe directrice est courbée en vue projetée sur un plan perpendiculaire à l'axe de rotation A1, le levier 52 étant, en d'autres termes, courbé.

La bielle de support 54 s'étend au moins depuis la manivelle 48 jusqu'au levier 52.

L'axe de rotation A4 du levier 52 par rapport à la bielle de support 54 est parallèle à l'axe de rotation A2 de la manivelle 48 par rapport à la bielle de support 54.

La distance entre l'axe de rotation A2 de la manivelle 48 par rapport à la bielle de support 54 et l'axe de rotation A4 du levier 52 par rapport à la bielle de support 54 reste constante lors de tout déplacement de la pédale 32 par rapport au bâti 28. Par exemple, la bielle de support 54 est ainsi rigide et indéformable.

Ainsi, lorsque le pilote appuie sur la pédale 32 au droit du raccordement de la manivelle 48 à la pédale 32, le déplacement de la pédale 32 entraine conjointement la manivelle 48 en rotation par rapport au bâti 28 selon l'axe de rotation A1, ainsi que le levier 52 en rotation par rapport au bâti 28 selon l'axe de rotation A3, par l'intermédiaire de la bielle de support 54.

De préférence, la manivelle 48 et le levier 52 forment un trapèze cinématique.

Plus précisément, la droite passant par la première liaison pivot d'articulation 50 de la manivelle 48 avec le bâti 28 et par la deuxième liaison pivot d'articulation 56 de la manivelle 48 avec la bielle de support 54 est sensiblement parallèle à la droite passant par la première liaison pivot d'articulation 58 du levier 52 avec le bâti 28 et par la deuxième liaison pivot d'articulation 60 du levier 52 avec la bielle de support 54.

Par « une droite passant par la liaison pivot d'articulation », on entend une droite passant par l'axe de rotation associé à cette liaison pivot d'articulation.

Ce parallélisme est conservé lors de tout déplacement de la pédale 32 par rapport au bâti 28.

Dans l'exemple préféré, la distance entre l'axe de rotation A1 de la manivelle 48 par rapport au bâti 28 et l'axe de rotation A2 de la manivelle 48 par rapport à la bielle de support 54 est différente de la distance entre l'axe de rotation A3 du levier 52 par rapport au bâti 28 et l'axe de rotation A4 du levier 52 par rapport à la bielle de support 54.

Plus précisément, la distance entre l'axe de rotation A1 et l'axe de rotation A2 est supérieure à la distance entre l'axe de rotation A3 et l'axe de rotation A4, par exemple supérieure d'au moins 5 mm à la distance entre l'axe de rotation A3 et l'axe de rotation A4.

Comme expliqué par la suite, l'utilisation du trapèze cinématique avec une différence de longueur entre la manivelle 48 et le levier 52 permet une légère variation d'angle de la pédale lors du réglage ergonomique du palonnier. Il en résulte une bonne évolution ergonomique de l'angle imposé à la cheville du pilote. Cette évolution de l'angle répond à une contrainte ergonomique qui vise à ne pas atteindre des angles extrêmes de la cheville inconfortables pour le pilote.

Dans l'exemple illustré, la structure articulée de support 34 de la pédale 32 est dépourvue d'autre manivelle ou levier raccordé au bâti 28 et autorisant la rotation de la pédale 32 par rapport au bâti 28 autour de l'axe de rotation A1, c'est-à-dire se déplaçant conjointement avec la pédale 32 lors d'une telle rotation.

La chaîne cinématique mécanique 38 de transmission d'un déplacement des pédales 32 par rapport au bâti 28 va maintenant être décrite.

Par « chaîne cinématique mécanique », on entend un ensemble de pièces raccordées les unes aux autres, l'ensemble étant propre à transmettre et/ou transformer un mouvement, les pièces comprenant par exemple au moins celles décrites par la suite.

De manière générale, comme illustré sur les figures 4 à 6, la chaîne cinématique mécanique 38 comprend au moins une pièce centrale de transmission 62.

La chaîne cinématique mécanique 38 comprend, pour chaque pédale 32, un mécanisme de transformation 64 d'un déplacement de la pédale 32 par rapport au bâti 28 en rotation de la pièce centrale de transmission 62 par rapport au bâti 28.

La chaîne cinématique mécanique 38 comprend aussi un mécanisme de transmission 66 joignant la pièce centrale de transmission 62 à l'arbre de sortie 36.

La pièce centrale de transmission 62 est propre à être mise en rotation, selon un axe de rotation A5, par rapport au bâti 28 par un déplacement des pédales 32 par rapport au bâti 28, ce déplacement étant ici la rotation des pédales 32 par rapport au bâti 28 autour des axes A1 respectifs.

La pièce centrale de transmission 62 est propre à être mise en rotation par rapport au bâti 28 selon l'axe A5 par les deux mécanismes de transformation 64 qui vont maintenant être décrits.

Tout mécanisme pourrait convenir tant que la pièce centrale de transmission 62 puisse être mise en rotation par rapport au bâti 28 selon l'axe A5 par un déplacement des pédales 32 par rapport au bâti 28 autour des axes A1 respectifs.

Les mécanismes de transformation 64 sont de préférence symétriques l'un de l'autre par rapport à un plan médian du bâti 28. Le plan médian du bâti 28 passe ici par la direction longitudinale X1 et la direction verticale Z1.

Dans un exemple préféré de réalisation, pour chaque pédale 32, le mécanisme de transformation 64 comprend au moins ladite manivelle 48 du système latéral pédalier 30 et une biellette intermédiaire 68.

La biellette intermédiaire 68 assure dans cet exemple la connexion entre la pièce centrale de transmission 62 et la manivelle 48.

Ainsi, la biellette intermédiaire 68 présente un premier point d'articulation 70 avec la manivelle 48 et un deuxième point d'articulation 72 avec la pièce centrale de transmission 62.

Ici et par la suite, chaque point d'articulation est une liaison pivot d'articulation telle que définie ci-dessus ou une liaison rotule.

En d'autres termes, la biellette intermédiaire 68 est propre à être mise en rotation par rapport à la manivelle 48 autour d'un axe de rotation A6 passant par le premier point d'articulation 70 de la biellette intermédiaire 68 avec la manivelle 48. De plus, la biellette intermédiaire 68 est propre à être mise en rotation par rapport à la pièce centrale de transmission 62 autour d'un axe de rotation A7 passant par le deuxième point d'articulation 72 de la biellette intermédiaire 68 avec la pièce centrale de transmission 62.

La distance entre l'axe de rotation A6 de la biellette intermédiaire 68 par rapport à la manivelle 48 et l'axe de rotation A7 de la biellette intermédiaire 68 par rapport à la pièce centrale de transmission 62 reste constante lors de tout déplacement de la pédale 32 par rapport au bâti 28.

Par exemple, la biellette intermédiaire 68 est ainsi rigide et indéformable. La bielle intermédiaire est de préférence monobloc.

Le premier point d'articulation 70 de la biellette intermédiaire 68 avec la manivelle 48 est à l'écart de la première liaison pivot d'articulation 50 de la manivelle 48 avec le bâti 28, et de préférence à l'écart du raccordement de la manivelle 48 avec la pédale 32.

En particulier, comme illustré sur la figure 4, le premier point d'articulation 70 de la biellette intermédiaire 68 avec la manivelle 48 est disposé entre la première liaison pivot d'articulation 50 de la manivelle 48 avec le bâti 28 et le raccordement de la manivelle 48 avec la pédale 32.

Dans l'exemple de la figure 4, l'axe de rotation A6 passant par le premier point d'articulation 70 de la biellette intermédiaire 68 avec la manivelle 48 s'étend de manière non parallèle à l'axe de rotation A7 passant par le deuxième point d'articulation 72 de la biellette intermédiaire 68 avec la pièce centrale de transmission 62.

De préférence, l'axe de rotation A7 passant par le deuxième point d'articulation 72 de la biellette intermédiaire 68 avec la pièce centrale de transmission 62 est parallèle à l'axe de rotation A5 de la pièce centrale de transmission 62 par rapport au bâti 28.

Par exemple, au niveau du deuxième point d'articulation 72, la pièce centrale de transmission 62 comprend une fourchette et la biellette intermédiaire 68 présente une extrémité de raccordement. La fourchette et l'extrémité de raccordement forment alors ledit deuxième point d'articulation 72 de la biellette intermédiaire 68 avec la pièce centrale de transmission 62.

Ainsi, lorsque la manivelle 48 du mécanisme de transformation 64 est entrainée en rotation par rapport au bâti 28 selon l'axe A1, la rotation de la manivelle 48 déplace la biellette intermédiaire 68 du mécanisme de transformation 64 par rapport au bâti 28, et le déplacement de la biellette intermédiaire 68 entraine en rotation la pièce centrale de transmission 62 par rapport au bâti 28 selon l'axe A5.

Cette rotation de la pièce centrale de transmission 62 par rapport au bâti 28 selon l'axe A5 est entrainée que le pilote appuie sur l'une ou l'autre des pédales 32.

Dans un mode de réalisation préféré, la chaîne cinématique mécanique 38 est propre à engendrer des déplacements des pédales 32 par rapport au bâti 28, selon les axes A1 respectifs, qui sont antagonistes l'un de l'autre.

En d'autres termes, la chaîne cinématique mécanique 38 est telle que la rotation de l'une des pédales 32 par rapport au bâti 28 selon un premier sens de rotation autour de son axe A1 provoque une rotation contraire de l'autre des pédales 32 par rapport au bâti 28 dans un deuxième sens de rotation opposé au premier sens de rotation, lorsque les sens de rotation sont vues d'un même côté.

En effet, la rotation de la pièce centrale de transmission 62 selon l'axe de rotation A5, provoquée par l'un des mécanismes de transformation 64, entraine de manière opposée l'autre des mécanismes de transformation 64 et donc la pédale 32 associée.

Ainsi, les deux biellettes intermédiaires 68 sont situées de part et d'autre de la pièce centrale de transmission 62.

Plus précisément, la rotation de la pièce centrale par rapport au bâti 28 selon l'axe de rotation A5, provoquée par la biellette intermédiaire 68 de l'un des mécanismes de transformation 64, déplace de manière antagoniste la biellette intermédiaire 68 de l'autre des mécanismes de transformation 64, et donc la manivelle 48 et la pédale 32 associées.

La chaîne cinématique mécanique 38 est propre à transmettre, à l'arbre de sortie 36, la rotation de la pièce centrale de transmission 62 par rapport au bâti 28 selon l'axe de rotation A5, ceci par l'intermédiaire du mécanisme de transmission 66.

Le mécanisme de transmission 66 comprend au moins une association homocinétique de deux joints de cardan 74 entre ladite pièce centrale de transmission 62 et l'arbre de sortie 36.

Par « joint de cardan », on entend un système de connexion qui permet la transmission d'une rotation angulaire d'une pièce à une autre pièce, les axes de rotation des pièces étant concourant.

Plus précisément, l'arbre de sortie 36 est propre à être mis en rotation par rapport au bâti 28 selon un axe de rotation A8 parallèle à l'axe de rotation A5 de la pièce centrale par rapport au bâti 28.

Par l'association homocinétique des deux joints de cardan 74, la vitesse de rotation de la pièce centrale de transmission 62 par rapport au bâti 28 selon l'axe de rotation A5 est égale, à chaque instant, à la vitesse de rotation de l'arbre de sortie 36 par rapport au bâti 28 selon l'axe de rotation A8.

Ainsi, lorsque la manivelle 48 du mécanisme de transformation 64 est entrainée en rotation par rapport au bâti 28 selon l'axe A1, la rotation de la manivelle 48 déplace la biellette intermédiaire 68 du mécanisme de transformation 64 par rapport au bâti 28, le déplacement de la biellette intermédiaire 68 entraine en rotation la pièce centrale de transmission 62 par rapport au bâti 28 selon l'axe A5, et le mécanisme de transmission 66 transmet la rotation de la pièce centrale à l'arbre de sortie 36 par rapport au bâti 28 selon l'axe A8.

Les deux palonniers 22 sont raccordés l'un à l'autre par l'intermédiaire de la bielle principale de liaison 24 de telle sorte que les positions relatives des pédales 32 d'un des palonniers 22 reflètent simultanément les positions relatives des pédales 32 de l'autre des palonniers 22.

De manière générale, la bielle principale de liaison 24 est disposée au-dessus des pédales 32, et au-dessus du bâti 28, en projection dans la direction verticale Z1. De plus, la bielle principale de liaison 24 est disposée de manière proximale par rapport au palonnier 22.

Le montage de la bielle principale de liaison 24 est ainsi facilité par sa disposition particulière.

Dans le mode de réalisation préféré, le raccordement des arbres de sortie 36 par la bielle principale de liaison 24 est tel qu'un déplacement des pédales 32 par rapport au bâti 28 de l'un des palonniers 22 est transmis aux pédales 32 de l'autre des palonniers 22.

A cet effet, dans le mode de réalisation illustré sur la figure 2, la bielle principale de liaison 24 est propre à transmettre la rotation de l'arbre de sortie 36 par rapport au bâti 28 selon l'axe A8 d'un des palonniers 22 en rotation, de même sens, de l'arbre de sortie 36 par rapport au bâti 28 selon l'axe A8 de l'autre des palonniers 22.

Pour ce faire, la bielle principale de liaison 24 est raccordée de part et d'autre aux arbres de sortie 36 des deux palonniers 22.

De préférence, la bielle principale de liaison 24 présente une liaison pivot d'articulation 76 avec chaque arbre de sortie 36 des palonniers 22.

En d'autres termes, pour chaque arbre de sortie 36 des palonniers 22, la bielle principale de liaison 24 est propre à être mise en rotation par rapport à l'arbre de sortie 36 autour d'un axe de transmission A14 passant par la liaison pivot d'articulation 76 de la bielle principale de liaison 24 avec cet arbre de sortie 36.

Dans l'exemple de la figure 2, les deux axes de transmission A14 sont parallèles l'un à l'autre.

Les axes de transmission A14 sont parallèles au axes de rotation A9 respectifs des arbres de sortie 36 par rapport aux bâti 28.

Ainsi, lorsqu'un des pilotes appuie sur une des pédales 32 d'un premier palonnier 22, la rotation conjointe de la pédale 32 et de la manivelle 48 par rapport au bâti 28 selon l'axe A1 est transformée par le premier palonnier 22 en rotation de l'arbre de sortie 36 par rapport au bâti 28 selon l'axe A8 de ce premier palonnier 22, la bielle principale de liaison 24 transmet cette rotation en rotation de même sens de l'arbre de sortie 36 par rapport au bâti 28 selon l'axe A8 du deuxième palonnier 22, qui est transformée par le deuxième palonnier 22 en rotation des pédales 32 par rapport au bâti 28 de ce deuxième palonnier 22.

En parallèle du raccordement des deux palonniers 22 par les arbres de sortie 36 et la bielle principale de liaison 24, il est aussi possible à chaque palonnier 22 de mesurer indépendamment une commande de l'angle de lacet à partir de la rotation de l'arbre de sortie 36 par rapport au bâti 28 selon l'axe A8, et d'exercer un effort artificiel contre le déplacement des pédales 32 par rapport au bâti 28 pour restituer un effort lié à la commande de l'angle de lacet.

Le système d'acquisition lacet 40 est supporté par le bâti 28.

Ainsi, chaque palonnier 22 porte son propre système d'acquisition lacet 40, ce qui permet une redondance de la commande en lacet, et d'éviter de dépendre d'une station centrale d'acquisition commune aux deux palonniers 22. La sécurité en est améliorée.

Le système d'acquisition lacet 40 est configuré pour générer un signal électrique représentatif du déplacement des pédales 32 par rapport au bâti 28.

Dans le mode de réalisation illustré, le système d'acquisition lacet 40 est configuré pour générer un signal électrique représentatif des rotations des pédales 32 par rapport au bâti 28, selon les axes de rotation A1 respectifs.

De manière générale, le système d'acquisition lacet 40 est configuré pour générer ledit signal à partir d'une mesure de déplacement de l'une quelconque des pièces de la chaîne cinématique mécanique 38 par rapport au bâti 28.

Dans l'exemple illustré, le système d'acquisition lacet 40 est en particulier configuré pour générer ledit signal électrique à partir d'une mesure de la rotation de l'arbre de sortie 36 par rapport au bâti 28 selon l'axe de rotation A8.

Pour ce faire, le système d'acquisition lacet 40 comprend au moins un capteur d'acquisition 78.

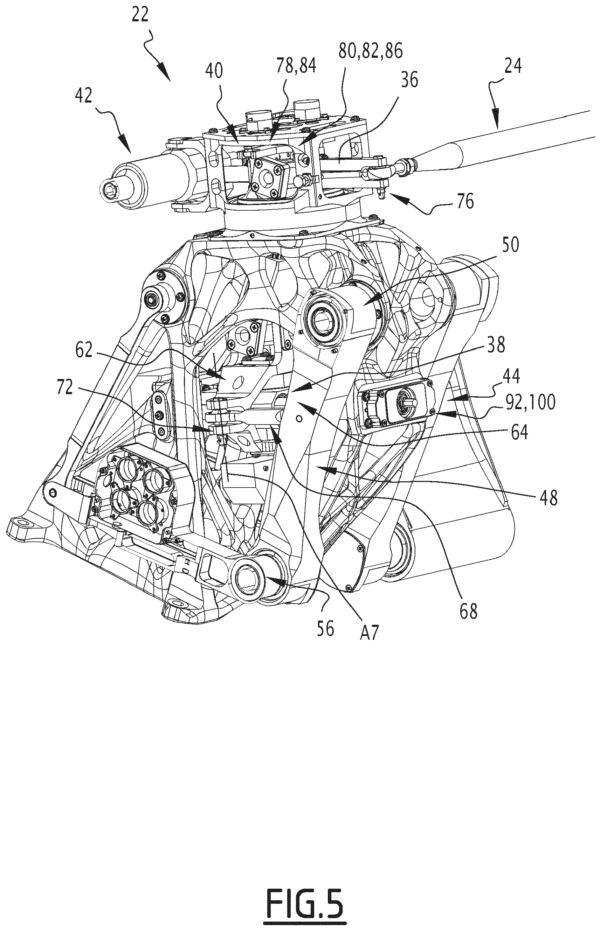

Dans le mode de réalisation préféré de la figure 5, le système d'acquisition lacet 40 comprend au moins deux capteurs d'acquisition redondants 78, et un dispositif d'entraînement conjoint 80 des capteurs d'acquisition 78.

De préférence, le système d'acquisition lacet 40 comprend de plus un système 82 de mise hors course des capteurs d'acquisition 78 qui présente les mêmes caractéristiques que celles décrites ci-après pour le système d'acquisition de freinage 112.

Chaque capteur d'acquisition 78 comprend un élément fixe et un élément mobile, l'élément mobile étant propre à être déplacé par rapport à l'élément fixe.

Chaque élément fixe est fixe par rapport au bâti 28.

En particulier, chaque capteur d'acquisition 78 comprend un galet 84 solidaire de l'élément mobile.

Les capteurs d'acquisition 78 sont de préférence rotatifs.

Chaque capteur d'acquisition 78 est propre à générer un signal électrique de mesure en fonction de la position de l'élément mobile par rapport à l'élément fixe sur une course électrique utile de mesure.

Le dispositif d'entraînement conjoint 80 est propre à déplacer, pour chaque capteur d'acquisition 78, l'élément mobile par rapport à l'élément fixe du capteur d'acquisition 78.

Les capteurs d'acquisition 78 sont avantageusement des capteurs résistifs, par exemple des potentiomètres, l'élément fixe comprenant alors une piste résistive et l'élément mobile comprenant alors un curseur.

Dans toute la suite, le terme « potentiomètre » sera utilisé pour désigner chaque capteur d'acquisition 78 du système d'acquisition lacet 40, le terme « piste » sera utilisé pour désigner l'élément fixe de chaque capteur 78 et le terme « curseur » sera utilisé pour désigner l'élément mobile de chaque capteur 78. Cependant, on comprend que les capteurs d'acquisition 78 peuvent être tout type de capteur, autre que potentiomètre, de préférence tout type de capteur rotatif, par exemple tout type de capteur résistif ou inductif.

Le dispositif d'entraînement conjoint 80 est propre à déplacer simultanément les curseurs par rapport aux pistes respectives, d'un même déplacement relatif.

Le dispositif d'entraînement conjoint 80 est propre à transformer un déplacement de l'arbre de sortie 36 par rapport au bâti 28 selon l'axe A8 en déplacement conjoint des curseurs par rapport aux pistes respectives.

Pour ce faire, le dispositif d'entraînement conjoint 80 comprend de préférence un cadre d'entraînement 86 conjoint des galets 84 des potentiomètres 78.

Le cadre d'entraînement 86 est alors mobile par rapport aux pistes des potentiomètres 78 et délimite, pour chaque galet 84, un logement de réception recevant le galet 84.

Le logement de réception est ici une rainure ouverte.

En particulier, le cadre d'entraînement 86 comprend une fourchette pour chaque galet 84, la fourchette délimitant ledit logement de réception du galet 84.

Dans l'exemple préféré où les potentiomètres 78 sont rotatifs, le cadre d'entraînement 86 est propre à être déplacé en rotation par rapport aux pistes des potentiomètres 78 autour d'un axe de rotation prédéterminé.

L'axe de rotation prédéterminé du cadre d'entraînement 86 par rapport aux pistes passe par un centre géométrique du cadre d'entraînement 86, le centre géométrique étant situé à même distance de chaque galet 84.

Le cadre d'entraînement 86 est propre à être mis en rotation par rapport aux pistes conjointement à la rotation de l'arbre de sortie 36 par rapport au bâti 28 selon l'axe A8.

De préférence, le cadre d'entraînement 86 est solidaire de l'arbre de sortie 36.

Ainsi, lors d'une rotation de l'arbre de sortie 36 par rapport au bâti 28 selon l'axe A8, l'arbre de sortie 36 entraine en rotation le cadre d'entraînement 86 et donc chaque curseur par rapport à la piste associée.

Pour chaque potentiomètre redondant 78, un signal électrique de mesure est généré en parallèle.

Par « signaux de mesure générés en parallèle » ou « signaux de mesure parallèles », on entend des signaux générés par chacun des potentiomètres redondants 78 pour un même déplacement relatif des curseurs par le dispositif d'entraînement conjoint 80.

Il est alors possible d'élaborer une commande de l'angle de lacet à partir de ces signaux de mesure parallèle.

Dans le mode de réalisation préféré, l'unité de traitement 26 du dispositif de commande 20 est propre à mettre en oeuvre la fonction de commande de l'angle de lacet.

L'unité de traitement 26 comprend par exemple un dispositif de traitement informatique et une mémoire.

Le dispositif de traitement informatique est connecté de manière opérationnelle à la mémoire.

Le dispositif de traitement informatique correspond par exemple à un processeur de signal numérique (DSP), un microcontrôleur, un réseau de cellules programmables (FPGA) et/ou un circuit intégré dédié (ASIC) capables d'exécuter diverses opérations de traitement de données et fonctions.

Le dispositif de traitement informatique comprend par exemple un seul processeur. Alternativement, le dispositif de traitement informatique comprend plusieurs processeurs, qui sont situés dans une même zone géographique, ou sont, au moins partiellement, situés dans des zones géographiques différentes et sont alors propres à communiquer entre eux.

Par le terme « mémoire », on entend toute mémoire informatique volatile ou non volatile appropriée au sujet actuellement divulgué, telle qu'une mémoire vive (RAM), une mémoire morte (ROM) ou d'autres éléments électroniques, optique, magnétique ou tout autre support de stockage lisible par ordinateur sur lequel les données et les fonctions de commande telles que décrites ici sont stockées.

Par conséquent, la mémoire est un support de stockage tangible où les données et les fonctions de commande sont stockées sous une forme non transitoire.

L'unité de traitement 26 est connectée au système d'acquisition lacet 40 et à la ou chaque gouverne de direction 12 de l'aéronef 10.

Pour faciliter la clarté, les différents câblages, notamment électriques, n'ont pas été illustrés sur les figures.

L'unité de traitement 26 est configurée pour recevoir chaque signal de mesure du système d'acquisition lacet 40.

Plus précisément, dans l'exemple préféré de réalisation, l'unité de traitement 26 est configurée pour recevoir les signaux de mesure générés en parallèle par les capteurs d'acquisition 78 du système d'acquisition lacet 40.

L'unité de traitement 26 est configurée pour élaborer un signal de commande de l'angle de lacet au moins à partir de chaque signal de mesure reçu du système d'acquisition lacet 40, et en particulier à partir des signaux de mesure parallèles.

L'élaboration est mise en oeuvre à partir par exemple d'une loi de commande de lacet, stockée dans la mémoire de l'unité 26.

L'unité de traitement 26 est alors configurée pour envoyer le signal de commande de l'angle de lacet élaboré à la ou chaque gouverne de direction 12 de l'aéronef 10.

Le système de restitution d'effort lacet 42 est propre à exercer une force d'opposition à l'encontre d'un déplacement, mis en oeuvre par le pilote, des pédales 32 par rapport au bâti 28 selon leurs axes A1 respectifs.

Le système de restitution d'effort lacet 42 est supporté par le bâti 28.

De manière générale, le système de restitution d'effort lacet 42 est configuré pour exercer ladite force d'opposition à l'encontre du déplacement de l'une quelconque des pièces de la chaîne cinématique mécanique 38 par rapport au bâti 28.

Le système de restitution d'effort lacet 42 définit une position de repos des pédales 32 par rapport au bâti 28 selon leurs axes de rotation A1 respectifs, la position de repos étant celle adoptée par les pédales 32 en l'absence de force exercée par le pilote.

Dans un mode de réalisation préféré, la force d'opposition exercée par le système de restitution d'effort lacet 42 présente une loi de comportement au moins proportionnelle au débattement des pédales par rapport à la position de repos, le coefficient de proportionnalité correspondant à une raideur équivalente du système de restitution d'effort lacet 42.

Dans un exemple de réalisation préféré, la force d'opposition exercée par le système de restitution d'effort lacet 42 est de préférence à double pente.

La raideur équivalente est alors fonction du débattement des pédales par rapport à la position de repos. La raideur équivalente présente au moins une première valeur constante, jusqu'à ce que les pédales atteignent un débattement prédéterminé, et une deuxième valeur constante distincte au-delà du débattement prédéterminé.

La deuxième valeur est par exemple strictement inférieure à la première valeur.

Dans l'exemple de réalisation illustré, le système de restitution d'effort lacet 42 comprend au moins un organe d'effort et un arbre d'effort.

L'organe d'effort comprend par exemple un ressort.

L'organe d'effort est propre à exercer ladite force d'opposition sur l'arbre d'effort, l'arbre d'effort étant joint à l'une quelconque des pièces de la chaîne cinématique mécanique 38.

Dans le mode de réalisation préféré illustré, le système de restitution d'effort lacet 42 est en particulier configuré pour exercer ladite force d'opposition à l'encontre de la rotation de l'arbre de sortie 36 par rapport au bâti 28 selon l'axe A8.

L'arbre d'effort est alors par exemple joint à l'un des deux joints de cardan 74 de la chaîne cinématique mécanique 38.

Dans l'exemple de la figure 5, l'arbre d'effort est formé par l'arbre de sortie 36.

En particulier, l'arbre de sortie 36 s'étend ici de part et d'autre du joint de cardan 74 qui lui est associé, un des côtés de l'arbre de sortie 36 formant l'arbre d'effort, l'autre côté étant raccordé à la bielle principale de liaison 24.

Le système de réglage ergonomique 44 d'une position d'utilisation des pédales 32 par rapport au bâti 28 va maintenant être décrit.

On définit par exemple les termes « position d'utilisation des pédales » par la position du point de raccordement de chaque pédale 32 à la manivelle 48 associée en projection sur un plan médian du bâti 28, lorsque les pédales 32 sont arrangées symétriquement par rapport au plan médian du bâti 28. En effet, lorsque les pédales 32 sont arrangées ainsi symétriquement, les deux points de raccordement de chaque pédale 32 à la manivelle 48 se superposent en projection dans le plan médian du bâti 28.

Chacun de ces points de raccordement correspond sensiblement à la position du talon d'un des pieds du pilote dans l'espace.

La position d'utilisation des pédales 32 par rapport au bâti 28 correspond de préférence à la position de repos définie par le système de restitution d'effort lacet 42.

Le système de réglage ergonomique 44 est propre à avancer ou reculer la position d'utilisation des pédales 32 par rapport au siège du pilote. Le système de réglage ergonomique 44 est ainsi propre à fournir la position d'utilisation des pédales 32 la plus ergonomique et adaptée à tout type de pilote.

Le système de réglage ergonomique 44 définit ainsi une position d'utilisation extrême distale et une position d'utilisation extrême proximale entre lesquelles la position d'utilisation des pédales 32 peut être verrouillée.

Ici et par la suite, les termes « distale » et « proximale » seront compris par rapport au pilote actionnant le palonnier. Plus précisément, un élément « proximal » s'entend comme un élément plus proche du pilote qu'un élément « distal ».

En particulier, lorsque le palonnier 22 est installé dans l'aéronef 10, les termes « distal » et « proximal » sont alors respectivement synonymes de « avant » et « arrière ».

La course de réglage autorisée par le système de réglage ergonomique 44 est d'au moins 100 mm. La course de réglage est notamment la distance entre la position d'utilisation extrême distale et la position d'utilisation extrême proximale.

De manière générale, le système de réglage ergonomique 44 est propre à déplacer conjointement chaque pédale 32, notamment pour avancer ou reculer la position d'utilisation par rapport au siège du pilote.

Plus précisément, le système de réglage ergonomique 44 est propre à déplacer conjointement chaque pédale 32 dans un plan perpendiculaire aux axes de rotation A1 respectifs des manivelles 48 par rapport au bâti 28.

Pour ce faire, dans un mode de réalisation préféré, le système de réglage ergonomique 44 comprend une coulisse 88 fixe par rapport au bâti 28 et un chariot 90.

Le système de réglage ergonomique 44 comprend aussi de préférence un dispositif de déplacement et de verrouillage 92 du chariot 90 sur la coulisse 88.

Le chariot 90 est propre à être déplacé sur la coulisse 88 le long d'une direction de réglage et est propre à être verrouillé en position sur la coulisse 88.

La direction de réglage est inscrite dans un plan passant par la direction longitudinale X1 et la direction verticale Z1. Ce plan est notamment un plan médian du bâti 28.

Comme illustré sur les figures 4 et 5, la pièce centrale de transmission 62 est portée par le chariot 90. De préférence, la pièce centrale de transmission 62 entoure le chariot 90.

Les deux biellettes intermédiaires 68 sont disposées de part et d'autre du chariot 90.

L'axe de rotation A5 de la pièce centrale de transmission 62 est perpendiculaire à la direction de réglage du chariot 90.

Ainsi, la pièce centrale de transmission 62 est propre à être mise en rotation selon l'axe de rotation A5 par rapport au chariot 90, par un déplacement des pédales 32 par rapport au bâti 28.

En d'autres termes, dans tout ce qui précède, lorsqu'il est question d'une rotation de la pièce centrale de transmission 62 par rapport au bâti 28 selon l'axe de rotation A5, cela est synonyme d'une rotation de la pièce centrale 62 par rapport au chariot 90 selon l'axe A5, lorsque le chariot 90 est verrouillé en position par rapport à la coulisse 88.

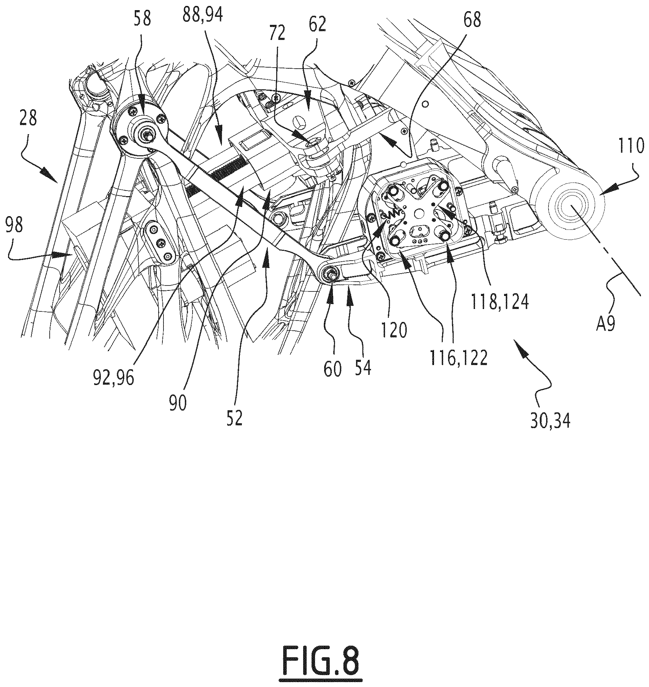

La coulisse 88 comprend au moins une tige de guidage 94 s'étendant selon la direction de réglage. Dans l'exemple de la figure 8, la coulisse 88 comprend deux tiges de guidage 94 s'étendant selon la direction de réglage. Alternativement, la coulisse 88 comprend une unique tige de guidage 94 ou plus de deux tiges de guidage 94.

En particulier, le chariot 90 présente, pour chaque tige de guidage 94, un orifice de guidage recevant la tige de guidage 94.

Un déplacement du chariot 90 par rapport à la coulisse 88 engendre simultanément un déplacement de la pièce centrale de transmission 62 par rapport au bâti 28 dans la direction de réglage et ainsi un déplacement de la position d'utilisation des pédales 32 par rapport au bâti 28.

En effet, lorsque le chariot 90 est déplacé par rapport à la coulisse 88 dans la direction de réglage, le déplacement de la pièce centrale de transmission 62 déplace chaque biellette intermédiaire 68 par rapport au bâti 28, et le déplacement de chaque biellette intermédiaire 68 entraine en rotation la manivelle 48 associée autour de l'axe de rotation A1 par rapport au bâti 28 et donc les pédales 32. Les deux pédales 32 sont ainsi déplacées conjointement d'une même distance. Elles sont rapprochées ou éloignées du siège du pilote de cette même distance.

Le réglage ergonomique des pédales 32 du palonnier 22 n'engendre aucune rotation de la pièce centrale de transmission 62 par rapport au bâti 28 autour de l'axe de rotation A5.

Ainsi, malgré le raccordement des arbres de sortie 36 des deux palonniers 22 par la bielle principale de liaison 24, les réglages ergonomiques des palonniers 22 sont indépendants l'un de l'autre.

Ceci apparait clairement sur la figure 2 qui montre bien des réglages ergonomiques distincts pour les deux palonniers 22.

Lors du réglage ergonomique, l'orientation angulaire des pédales 32 par rapport aux manivelles 48 respectives évolue par l'intermédiaire du trapèze cinématique formé par la manivelle 48 et le levier 52. Cependant, cette évolution se fait sur une plage angulaire conforme aux angles de chevilles admissibles des pilotes.

Le dispositif de déplacement et de verrouillage 92 du chariot 90 sur la coulisse 88 comprend de préférence une vis de réglage 96.

La vis de réglage 96 est par exemple une vis sans fin.

Par exemple, la vis de réglage 96 est propre à coopérer avec le chariot 90 pour entrainer en translation le chariot 90 par rapport à la coulisse 88 le long de la direction de réglage, lorsque la vis de réglage 96 est mise en rotation par rapport à la coulisse 88.

Le chariot 90 présente pour cela un orifice d'entraînement recevant la vis de réglage 96.

La vis de réglage 96 est en particulier aussi configurée pour verrouiller en position le chariot 90. Dans ce cas, la vis de réglage 96 est irréversible.

L'irréversibilité de la vis de réglage 96 est en particulier alors suffisante pour empêcher le déplacement du chariot 90 par rapport à la coulisse 88, lorsque le pilote appuie sur les pédales 32.

Ainsi, dans cet exemple, la vis de réglage 96 irréversible assure à la fois la fonction de déplacement du chariot 90 et de verrouillage de la position du chariot 90. Alternativement ou en complément, le dispositif de déplacement et de verrouillage 92 comprend un autre système de verrouillage dédié, notamment distinct de la vis de réglage 96.

La vis de réglage 96 s'étend selon la direction de réglage.

La direction de réglage est ici parallèle à la coulisse 88.

Avantageusement, le dispositif de déplacement et de verrouillage 92 comprend aussi un motoréducteur de réglage 98 et/ou un organe de réglage manuel 100.

Le motoréducteur de réglage 98 est propre à être actionné par un pilote pour entrainer en rotation la vis de réglage 96 par rapport à la coulisse 88.

L'organe de réglage manuel 100 est propre à transmettre, à la vis de réglage 96, un couple manuel exercé par un pilote pour entrainer en rotation la vis de réglage 96 par rapport à la coulisse 88.

Ainsi, même en cas de défaillance du motoréducteur de réglage 98, le pilote est toujours à même de régler l'ergonomie du palonnier 22 en actionnant l'organe de réglage manuel 100.

Dans le mode de réalisation préférée comprenant ce système de réglage ergonomique 44, la chaîne cinématique mécanique 38 du palonnier 22 est adaptée pour pouvoir transmettre à l'arbre de sortie 36 le déplacement des pédales 32 par rapport au bâti 28 pour toute position du chariot 90 sur la coulisse 88.

Dans la chaîne cinématique mécanique 38, le mécanisme de transmission 66 joignant la pièce centrale de transmission 62 à l'arbre de sortie 36 comprend alors de préférence une liaison glissière 102 interposée entre les deux joints de cardan 74.

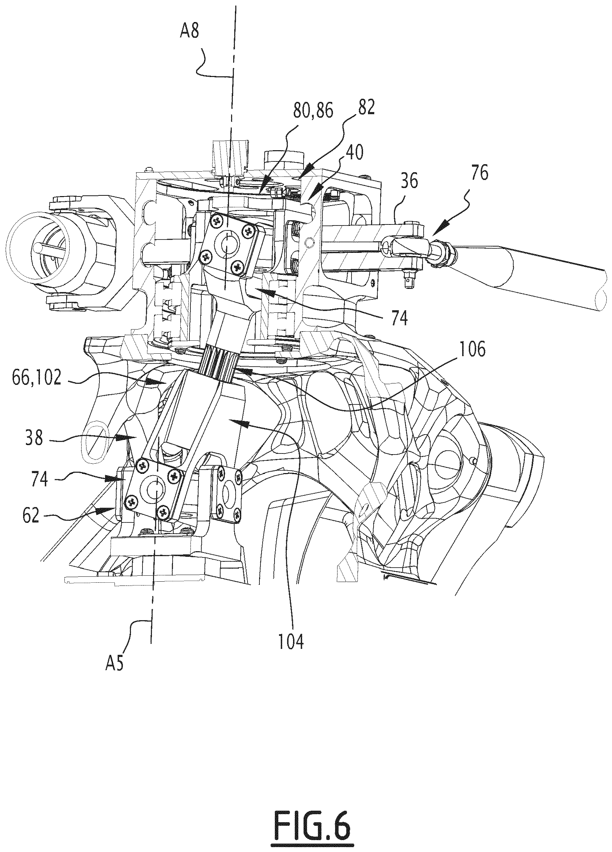

Dans l'exemple de la figure 6, la liaison glissière 102 est jointe à la pièce centrale de transmission 62 par un des joints de cardan 74 et est jointe à l'arbre de sortie 36 par l'autre des joints de cardan 74.

La liaison glissière 102 présente un axe de glissement.

L'axe de glissement passe par exemple par les deux joints de cardan 74.

La liaison glissière 102 est propre à être mise en rotation d'un seul bloc, autour de l'axe de glissement, par rapport à la pièce centrale de transmission 62 et par rapport à l'arbre de sortie 36.

Ainsi, lorsque le chariot 90 est déplacé le long de la direction de réglage, la liaison glissière 102 permet une diminution ou augmentation de la distance entre la pièce centrale de transmission 62 et l'arbre de sortie 36, tout en autorisant la transmission de la rotation de la pièce centrale 62, par rapport au bâti 28, à l'arbre de sortie 36.

Dans un exemple préféré de réalisation, illustré sur la figure 6, la liaison glissière 102 comprend un fourreau 104 et une tige d'entraînement 106. En d'autres termes, la tige d'entraînement 106 est propre à glisser le long du fourreau 104 selon l'axe de glissement.

Dans l'exemple illustré, la pièce centrale de transmission 62 est jointe au fourreau 104 par un des deux joints de cardan 74 et l'arbre de sortie 36 est joint à la tige d'entraînement 106 par l'autre des deux joints de cardan 74.

La tige d'entraînement 106 est reçue en partie dans le fourreau 104.

Pour que la liaison glissière 102 puisse être mise en rotation d'un seul bloc, autour de l'axe de glissement, le fourreau 104 présente une surface interne coopérant avantageusement avec une surface externe de la tige d'entraînement 106 pour bloquer toute rotation autour de l'axe de glissement de la tige d'entraînement 106 par rapport au fourreau 104.

Dans l'exemple illustré, le fourreau 104 présente une section transversale fermée.

De préférence, la surface interne du fourreau 104 et la surface externe de la tige d'entraînement 106 présentent des sections transversales non-circulaires, dans au moins une région où lesdites surfaces sont en contact.

Dans un mode de réalisation avantageux, illustré sur les figures 6, la tige d'entraînement 106 et le fourreau 104 sont cannelés.

En particulier, la tige d'entraînement 106 et le fourreau 104 présentent des cannelures correspondantes.

Les cannelures s'étendent parallèlement à l'axe de glissement.

Les formes cannelées de la tige d'entraînement 106 et du fourreau 104 permettent un verrouillage de la rotation de la tige d'entraînement 106 par rapport au fourreau 104 autour de l'axe de glissement et une transmission de couples de rotation élevés de la pièce centrale à l'arbre de sortie 36.

La fonction avantageuse de freinage par le palonnier 22 va maintenant être décrite.

Dans ce mode de réalisation préféré, au moins un des systèmes latéraux pédaliers 30 du palonnier 22 comprend aussi un système de freinage 108.

Avantageusement, chaque système latéral pédalier 30 comprend un système de freinage 108 tel que décrit par la suite.

Chaque système latéral pédalier 30 porte alors son propre système de freinage 108, ce qui permet une redondance de la commande en freinage au sein du palonnier 22 et d'éviter de dépendre d'une station centrale commune aux deux systèmes latéraux pédaliers 30, la sécurité en est améliorée. On comprend qu'il est aussi possible en outre d'éviter de dépendre d'une station centrale d'acquisition commune aux deux palonniers 22 pour le freinage.

Chaque système de freinage 108 est propre à commander le freinage de l'aéronef 10, lorsque les roues de l'aéronef 10 sont en contact avec le sol.

Chaque système de freinage 108 comprend la pédale 32 du système latéral pédalier 30 associé, la pédale 32 étant alors raccordée à la manivelle 48 par une liaison pivot de freinage 110.

Dans un mode de réalisation préféré, le système de freinage 108 comprend aussi une butée de freinage, la butée de freinage définissant une position d'arrêt de la pédale 32.

Chaque système de freinage 108 comprend aussi un système d'acquisition de freinage 112.

De préférence, chaque système de freinage 108 comprend en outre un système de restitution d'effort de freinage 114.

Dans le mode de réalisation illustré, la pédale 32 est propre à être mise en rotation par rapport à la manivelle 48 autour d'un axe de rotation A9 passant par ladite liaison pivot de freinage 110.

Une telle rotation de la pédale 32 par rapport à la manivelle 48 autour de l'axe de rotation A9 correspond par exemple à une rotation du pied du pilote autour de son talon et est destinée à commander un freinage de l'aéronef 10. Le pilote appuie alors sur une zone de la pédale 32 décalée par rapport à l'axe A9.

La pédale 32 est propre à être mise en rotation par rapport à la manivelle 48 autour de l'axe de rotation A9 de manière indépendante à toute rotation conjointe de la pédale 32 et de la manivelle 48 par rapport au bâti 28 selon l'axe de rotation A1.

En d'autres termes, le pilote peut commander l'angle de lacet et le freinage indépendamment par deux mouvements distincts de son pied. Il n'y a pas de couplage de la commande lacet et de la commande de freinage.

De plus, les deux pédales 32 du palonnier 22 sont propres à être mises en rotation par rapport à leurs manivelles 48 respectives autour de leurs axes de rotation A9 respectifs indépendamment l'une de l'autre.

En d'autres termes, il n'y a pas de couplage du freinage par les pédales 32.

L'axe de rotation A9 de la pédale 32 par rapport à la manivelle 48 est avantageusement parallèle à l'axe de rotation A1 de la manivelle 48 par rapport au bâti 28. En variante, l'axe de rotation A9 présente un angle non nul, par exemple de quelques degrés, avec l'axe de rotation A1, la pédale 32 étant plus orientée vers le pilote que l'axe de rotation A1.

De préférence, la liaison pivot de freinage 110 de la pédale 32 est concourante à ladite deuxième liaison pivot d'articulation 56 de la manivelle 48 avec la bielle de support 54.

En d'autres termes, l'axe de rotation A2 de la manivelle 48 par rapport à la bielle de support 54 est sensiblement confondu avec l'axe de rotation A9 de la pédale 32 par rapport à la manivelle 48.

Le système d'acquisition de freinage 112 est configuré pour générer un signal électrique représentatif d'un déplacement de la pédale 32 par rapport à la manivelle 48 autour de l'axe de rotation A9.

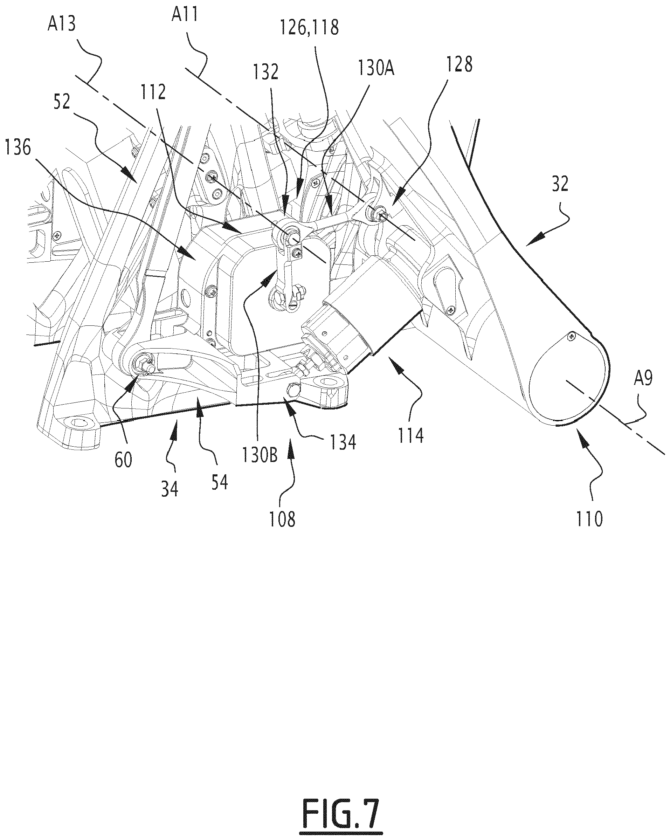

Le système d'acquisition de freinage 112 est supporté par au moins l'un de la manivelle 48, du levier 52 et de la bielle de support 54. De préférence, dans l'exemple illustré sur la figure 7, le système d'acquisition de freinage 112 est supporté par la bielle de support 54.

Pour ce faire, le système d'acquisition de freinage 112 comprend au moins un capteur d'acquisition 116. De préférence, le système d'acquisition de freinage 112 comprend au moins deux capteurs d'acquisition redondants 116. Encore de préférence, le système d'acquisition de freinage 112 comprend au moins trois capteurs d'acquisition redondants 116. Dans le mode de réalisation préféré des figures 7 et 8, le système d'acquisition de freinage 112 comprend au moins quatre capteurs d'acquisition redondants 116.

Le système d'acquisition de freinage 112 comprend aussi un dispositif d'entraînement conjoint 118 des capteurs d'acquisition 116.

De préférence, le système d'acquisition de freinage 112 comprend un système 120 de mise hors course des capteurs d'acquisition 116.

Dans l'exemple illustré sur la figure 7, le système d'acquisition de freinage 112 comprend aussi un capot recouvrant les capteurs d'acquisition 116.

Chaque capteur d'acquisition 116 comprend un élément fixe et un élément mobile, l'élément mobile étant propre à être déplacé par rapport à l'élément fixe.

Chaque élément fixe est de préférence solidaire de l'un de la manivelle 48, du levier 52 et de la bielle de support 54, par exemple de la bielle de support 54.

En particulier, chaque capteur d'acquisition 116 comprend un galet 122 solidaire de l'élément mobile.

Chaque capteur d'acquisition 116 est propre à générer un signal électrique de mesure en fonction de la position de l'élément mobile par rapport à l'élément fixe sur une course électrique utile de mesure.

Chaque capteur d'acquisition 116 redondant présente de préférence la même course électrique utile de mesure.

Pour chaque capteur d'acquisition redondant 116, un signal électrique de mesure est généré en parallèle. Ici aussi, par « signaux de mesure générés en parallèle » ou « signaux de mesure parallèles », on entend des signaux générés par chacun des capteurs d'acquisition 116 redondants pour un même déplacement relatif des éléments mobiles par le dispositif d'entraînement conjoint 118.

Les capteurs d'acquisition 116 sont de préférence rotatifs.

Chaque capteur d'acquisition 116 est avantageusement un capteur résistif, par exemple un potentiomètre, l'élément fixe comprenant une piste résistive et l'élément mobile comprenant alors un curseur. Alternativement, chaque capteur d'acquisition est un capteur inductif, par exemple un capteur RVDT (de l'anglais Rotary Variable Differential Transformer), l'élément fixe comprenant alors au moins un bobinage, de préférence au moins un bobinage primaire et un bobinage secondaire, l'élément mobile comprenant alors un noyau.

Le dispositif d'entraînement conjoint 118 est propre à déplacer simultanément les éléments mobiles par rapport aux éléments fixes respectifs, d'un même déplacement relatif.

Le dispositif d'entraînement conjoint 118 est propre à transformer la rotation de la pédale 32 par rapport à la manivelle 48 autour de l'axe de rotation A9 en déplacement conjoint des éléments mobiles par rapport aux éléments fixes respectifs.

Pour ce faire, le dispositif d'entraînement conjoint 118 comprend de préférence un cadre d'entraînement conjoint 124 des galets 122 des capteurs d'acquisition 116.

Dans l'exemple illustré sur la figure 7, le dispositif d'entraînement conjoint 118 comprend en outre un bras d'actionnement 126 du cadre d'entraînement 124.

Le cadre d'entraînement 124 est mobile par rapport aux éléments fixes des capteurs d'acquisition 116 et délimite, pour chaque galet 122, un logement de réception recevant le galet 122.

En particulier, le cadre d'entraînement 124 comprend une fourchette pour chaque galet 122, la fourchette délimitant ledit logement de réception du galet 122.

Le logement de réception est ici une rainure ouverte.

Dans l'exemple illustré, le cadre d'entraînement 124 forme une croix. Tout autre forme pourrait être envisagée néanmoins.

Dans l'exemple préféré où les capteurs d'acquisition 116 sont rotatifs, le cadre d'entraînement 124 est propre à être déplacé en rotation par rapport aux éléments fixes des capteurs d'acquisition 116, autour d'un axe de rotation prédéterminé.

L'axe de rotation prédéterminé passe, de préférence, par un centre géométrique du cadre d'entraînement 124, le centre géométrique étant alors situé à même distance de chaque galet 122. Alternativement, au moins deux des galets 122 sont disposés respectivement à des distances différentes audit axe de rotation prédéterminé du cadre d'entraînement 124.

Dans l'exemple de la figure 8, l'axe de rotation prédéterminé du cadre d'entraînement 124 par rapport aux éléments fixes des capteurs d'acquisition 116 est parallèle à l'axe de rotation A9 de la pédale 32 par rapport à la manivelle 48.

Pour chaque capteur d'acquisition 116, la rotation du cadre d'entraînement 124, par rapport à l'élément fixe, déplace l'élément mobile par rapport à l'élément fixe du capteur d'acquisition 116.

Plus précisément, la rotation du cadre d'entraînement 124 déplace simultanément les éléments mobiles par rapport aux éléments fixes respectifs, d'un même déplacement relatif.

Le bras d'actionnement 126 est propre à transformer la rotation de la pédale 32 par rapport à la manivelle 48 autour de l'axe de rotation A9 en rotation du cadre d'entraînement 124 par rapport aux éléments fixes des capteurs d'acquisition 116 autour de l'axe de rotation prédéterminé du cadre d'entraînement 124.

Pour ce faire, le bras d'actionnement 126 est raccordé d'une part à la pédale 32 et est solidaire d'autre part du cadre d'entraînement 124.

De préférence, le bras d'actionnement 126 présente un point d'articulation 128 avec la pédale 32.

En d'autres termes, le bras d'actionnement 126 est propre à être mis en rotation par rapport à la pédale 32 autour d'un axe de rotation A11 passant par ledit point d'articulation 128 du bras d'actionnement 126 avec la pédale 32.

L'axe de rotation A11 passant par ledit point d'articulation 128 du bras d'actionnement 126 avec la pédale 32 est de préférence parallèle à l'axe de rotation A9 passant par ladite liaison pivot de freinage 110.

Comme illustré sur la figure 7, le bras d'actionnement 126 est de préférence coudé.

Dans un mode de réalisation préféré, le bras d'actionnement 126 est de plus articulé.

Le bras d'actionnement 126 comprend alors une première section d'entraînement 130A raccordée à la pédale 32 et une deuxième section d'entraînement 130B solidaire du cadre d'entraînement 124.

La première section d'entraînement 130A est raccordée à la pédale 32 par l'intermédiaire dudit point d'articulation 128 du bras d'actionnement 126 avec la pédale 32.

La première section d'entraînement 130A présente de préférence une liaison pivot d'articulation 132 avec la deuxième section d'entraînement 130B.

En d'autres termes, la première section d'entraînement 130A est propre à être mise en rotation par rapport à la deuxième section d'entraînement 130B autour d'un axe de rotation A13 passant par ladite liaison pivot d'articulation 132 des sections d'entraînement 130A, 130B.

La distance entre l'axe de rotation A13 de la première section d'entraînement 130A par rapport à la deuxième section d'entraînement 130B et l'axe de rotation A11 du bras d'actionnement 126 par rapport à la pédale 32 reste constante lors de tout déplacement de la pédale 32 par rapport au bâti 28. Par exemple, la première section d'entraînement 130A est ainsi rigide et indéformable.

La deuxième section d'entraînement 130B est mécaniquement liée au cadre d'entraînement 124 et est propre à tourner conjointement avec le cadre d'entraînement 124.

Par exemple, la deuxième section d'entraînement 130B est rigide et indéformable.

Dans un mode préféré de réalisation, le système 120 de mise hors course des capteurs d'acquisition 116 est configuré, pour chaque capteur d'acquisition 116, pour déplacer l'élément mobile par rapport à l'élément fixe hors de la course électrique utile de mesure du capteur d'acquisition 116, en cas de désaccouplement du dispositif d'entraînement conjoint 118.

Dans l'exemple illustré, le système 120 de mise hors course exerce une force de mise hors course sur le cadre d'entraînement 124.

La force de mise hors course est suffisante pour déplacer, pour chaque capteur d'acquisition 116, l'élément mobile par rapport à l'élément fixe hors de la course électrique utile de mesure du capteur d'acquisition 116, en cas de désaccouplement du dispositif d'entraînement conjoint 118.

Pour ce faire, le système 120 de mise hors course comprend par exemple au moins un ressort ou un ensemble de ressorts propre à exercer la force de mise hors course.

Dans cet exemple, le bras d'actionnement 126 exerce, en cas d'absence de désaccouplement du dispositif d'entraînement conjoint 118, une force de maintien sur le cadre d'entraînement 124 opposée à la force de mise hors course. La force de maintien est supérieure ou égale à la force de mise hors course.

En d'autres termes, en l'absence de désaccouplement du dispositif d'entraînement conjoint 118, le bras d'actionnement 126 maintient chaque élément mobile dans la course électrique utile de mesure du capteur d'acquisition 116. Lors d'un désaccouplement du dispositif d'entraînement conjoint 118, la force de maintien ne s'exerce plus et la force de mise hors course déplace chaque élément mobile en conséquence.

Par « désaccouplement du dispositif d'entraînement », on entend tout événement à partir duquel le dispositif d'entraînement n'est plus en mesure de déplacer conjointement les éléments mobiles par rapport aux éléments fixes respectifs. En particulier, le dispositif d'entraînement n'est alors plus en mesure de transformer la rotation de la pédale 32 autour de l'axe de rotation A9 en déplacement conjoint des éléments mobiles par rapport aux éléments fixes respectifs.

Le désaccouplement du dispositif d'entraînement désigne par exemple toute panne, tout blocage ou toute rupture d'une pièce du dispositif d'entraînement conjoint 118 ou d'un raccord entre deux pièces du dispositif d'entraînement. Le terme « rupture » désigne notamment la fracture d'une chose solide en deux ou plusieurs parties sous l'effet d'efforts ou de contraintes trop intenses.

Il s'agit par exemple d'une rupture du bras d'actionnement 126, d'une rupture du raccord du bras d'actionnement 126 à la pédale 32 ou au cadre d'entraînement 124, ou d'une rupture d'une partie du cadre d'entraînement 124.

Le désaccouplement du dispositif d'entraînement désigne en complément ou en variante tout défaut de montage/d'assemblage d'une ou des pièces du dispositif d'entraînement, comme par exemple l'oubli d'une vis de fixation, le dévissage d'une des vis par vibration, ou le désalignement de pièces du dispositif d'entraînement.

L'unité de traitement 26 du dispositif de commande 20 est dans cet exemple de réalisation propre à mettre en oeuvre la fonction de freinage.

L'unité de traitement 26 est connectée au système d'acquisition de freinage 112 et à au moins un des freins de l'aéronef 10.

L'unité de traitement 26 est configurée pour recevoir chaque signal de mesure du système d'acquisition de freinage 112.

Plus précisément, dans l'exemple de réalisation, l'unité de traitement 26 est configurée pour recevoir les signaux de mesure générés en parallèle par les capteurs d'acquisition 116 du système d'acquisition de freinage 112.

L'unité de traitement 26 est configurée pour élaborer un signal de commande de freinage au moins à partir de chaque signal de mesure reçu du système d'acquisition de freinage 112, et en particulier à partir des signaux de mesure parallèles reçu du système d'acquisition de freinage 112.

L'unité de traitement 26 est alors configurée pour envoyer le signal de commande de freinage élaboré à au moins un des freins de l'aéronef 10.

Dans l'exemple préféré de l'invention où le système d'acquisition de freinage 112 comprend le système 120 de mise hors course des capteurs d'acquisition 116, l'unité de traitement 26 est aussi configurée pour vérifier que chacun des signaux de mesure parallèles appartient à la course utile électrique de mesure du capteur d'acquisition 116.

Pour ce faire, la mémoire de l'unité de traitement 26 stocke par exemple des informations caractéristiques des capteurs d'acquisition 116, les informations caractéristiques comprenant au moins la course utile électrique de mesure de chaque capteur d'acquisition 116. Lors de la vérification, l'unité de traitement 26 compare chacun des signaux de mesure parallèles à la course utile électrique de mesure stockée.

L'unité de traitement 26 est configurée pour en déduire si les signaux de mesure parallèles appartiennent à la course utile électrique de mesure des capteurs d'acquisition 116.

Alternativement ou en complément, l'unité de traitement 26 est configurée pour comparer des signaux de mesure provenant d'au moins deux systèmes d'acquisition de freinage distincts 112, et pour en déduire si des signaux de mesure d'un des systèmes d'acquisition 112 n'appartiennent pas à la course utile électrique de mesure des capteurs d'acquisition 116.

L'unité de traitement 26 est par la suite configurée pour élaborer le signal de commande de freinage à partir des signaux de mesure parallèles vérifiés comme appartenant à la course utile électrique de mesure des capteurs d'acquisition 116.

En d'autres termes, le signal de commande de freinage n'est donc pas élaboré à partir de signaux n'appartenant pas à la course utile électrique de mesure des capteurs d'acquisition 116.

Il est en conséquence possible d'écarter toute mesure provenant d'un système d'acquisition de freinage 112 pour lequel un désaccouplement du dispositif d'entraînement conjoint 118 associé s'est produit. La sécurité du dispositif de commande 20 en est grandement améliorée.

En outre, on comprend que l'unité de traitement 26 est propre à détecter un tel désaccouplement du dispositif d'entraînement conjoint 118 à partir de l'étape de vérification décrite.

A l'issue de l'étape de vérification, l'unité de traitement 26 est de préférence configurée pour informer le pilote du désaccouplement détecté. Pour ce faire, l'unité de traitement 26 est par exemple propre à afficher sur l'écran du système d'affichage de l'aéronef 10 une image représentative associée au désaccouplement détecté.

Le système de restitution d'effort de freinage 114 est propre à exercer une force contre une rotation de ladite pédale 32 par rapport à la manivelle 48 autour de la liaison pivot de freinage 110.

Le système de restitution d'effort de freinage 114 définit une position stable de la pédale 32 par rapport à la manivelle 48 selon l'axe de rotation A9, la position stable étant celle adoptée par la pédale 32 en l'absence de sollicitation extérieure par le pilote.

Le système de restitution d'effort de freinage 114 est supporté par au moins l'un de la manivelle 48, du levier 52 et de la bielle de support 54.

Avantageusement, le système de restitution d'effort de freinage 114 et le système d'acquisition de freinage 112 sont supportés par le même élément choisi parmi la manivelle 48, le levier 52 et la bielle de support 54. En particulier, tout le système de freinage 108 est embarqué sur ce même élément.

De préférence, dans l'exemple illustré sur la figure 7, le système de restitution d'effort de freinage 114 est supporté par la bielle de support 54.

Dans un exemple de réalisation, la force d'opposition exercée par le système de restitution d'effort lacet 42 est de préférence à simple pente.

Dans l'exemple de réalisation illustré, le système de restitution d'effort de freinage 114 comprend par exemple au moins un organe d'effort.

L'organe d'effort comprend par exemple un ressort. De préférence, le ressort est un ressort à seuil.

L'organe d'effort est propre à exercer ladite force d'opposition sur la pédale 32.

De préférence, au moins l'organe d'effort est interposé entre la pédale 32 et la bielle de support 54 lors d'une rotation de la pédale 32 par rapport à la manivelle 48 autour de la liaison pivot de freinage 110.

La pédale 32 est mobile par rapport à la manivelle 48 autour de la liaison pivot de freinage 110 entre la position stable et la position d'arrêt contre la butée de freinage.

Le système de restitution d'effort de freinage 114 est séparé du système d'acquisition de freinage 112. Ceci permet d'améliorer la sécurité.

En particulier, le système de restitution d'effort de freinage 114 est disposé à l'écart du système d'acquisition de freinage 112.

Dans l'exemple préféré illustré sur la figure 7, l'élément parmi la manivelle 48, le levier 52 et la bielle de support 54 qui supporte le système de freinage 108 (la bielle de support 54 dans cet exemple) comprend un plateau 134 et une paroi 136 s'étendant en saillie à partir du plateau 134.

Le cadre d'entraînement 124 du système d'acquisition de freinage 112 est alors rapporté contre ladite paroi 136. Les éléments fixes des capteurs d'acquisition 116 sont fixés sur la paroi 136.

De plus, le système de restitution d'effort de freinage 114 présente une extrémité solidaire dudit plateau 134.

L'extrémité du système de restitution d'effort de freinage 114 est ainsi disposée à l'écart du système d'acquisition de freinage 112.

Dans l'exemple ci-dessus, il a été décrit un dispositif de commande 20 d'aéronef comprenant au moins deux palonniers 22. Alternativement, le dispositif de commande 20 d'aéronef comprend un unique palonnier 22 tel que décrit ci-dessus et est donc dépourvu de bielle principale de liaison 24. En particulier, le cockpit 16 ne comprend alors qu'un unique siège de pilotage. En effet, de nombreux avantages liés à l'invention restent intéressants même dans le cas d'un unique palonnier 22.

En variante de ce qui a été décrit ci-dessus, la pièce centrale de transmission 62 est jointe à la tige d'entraînement 106 par un des joints de cardan 74 et l'arbre de sortie 36 est joint au fourreau 104 par l'autre des deux joints de cardan 74.

Alternativement des formes cannelées de la liaison glissière 102, toute forme autre que cannelée pourrait convenir pour bloquer toute rotation autour de l'axe de glissement de la tige d'entraînement 106 par rapport au fourreau 104. Dans une autre variante, l'un de l'arbre et du fourreau 104 présente une rainure non-perpendiculaire à l'axe de glissement et l'autre de l'arbre et du fourreau 104 présente une clavette reçue dans ladite rainure.

En variante, la structure articulée de support 34 de la pédale 32 ne comprend que la manivelle 48, et est donc dépourvue du levier 52 et de la bielle de support 54 décrits ci-dessus.

Dans encore une autre variante, dans le ou chaque palonnier 22, un seul des systèmes latéraux pédaliers 30 du palonnier 22 comprend un système de freinage 108 tel que décrit ci-dessus.

Grâce à la chaîne cinématique mécanique 38 de l'invention, et en particulier l'association homocinétique des deux joints cardans homocinétiques, l'invention permet d'isoler le couple de commande de l'angle de lacet en bout de chaine au niveau de l'arbre de sortie 36.

Cela permet ultérieurement de relier les deux palonniers 22 via la bielle principale de liaison 24, tout en assurant une grande course possible de réglage ergonomique indépendamment pour chacun des palonniers 22.

Grâce à l'association de la manivelle 48, du levier 52 et de la bielle de support 54, formant notamment le trapèze cinématique, l'orientation angulaire de chaque pédale 32 par rapport à la manivelle 48 autour de l'axe A9 est contrôlée, malgré une grande course possible de réglage ergonomique de la position d'utilisation des pédales 32.

Chaque palonnier 22 peut être adapté à l'ergonomie d'une large gamme de tailles de pilotes, comprenant notamment des tailles de 1,57m à 1,91m.

Le bâti 28 du palonnier 22 peut présenter toute forme possible.

Un mode de réalisation préféré du bâti 28 va néanmoins être décrit ci-après.

On définit pour le bâti 28 seul, indépendamment des directions de l'aéronef 10 :
- une direction d'élévation Z2, correspondant par exemple à la direction verticale Z1 lorsque le bâti 28 est fixé dans l'aéronef 10 ; et
- une direction longitudinale X2 orthogonale à la direction d'élévation Z2 et qui est par exemple parallèle à l'axe longitudinal L de l'aéronef 10, lorsque le bâti 28 est fixé sur le plancher du cockpit 16 ;
- une direction latérale Y2 qui est orthogonale auxdites directions d'élévation Z2 et longitudinale X2.

Le bâti 28 comprend un socle 150, une ossature de support 152 et des interfaces de raccordement 154A, 154B, 154C, chaque interface de raccordement 154A-154C étant propre à raccorder une autre pièce du palonnier 22 décrite ci-dessus au bâti 28.

Le bâti 28 comprend aussi par exemple, pour chaque autre pièce du palonnier 22 décrite ci-dessus, un système de fixation 156 de la pièce à l'interface de raccordement 154A-154C.

Le bâti 28 présente un plan médian longitudinal, le plan médian longitudinal étant parallèle à la direction d'élévation Z2 du bâti 28 et à la direction longitudinale X2.

Le plan médian du bâti 28 passe notamment par le milieu latéral du bâti 28, c'est-à-dire le milieu du bâti 28 suivant la direction latérale Y2.

De préférence, le socle 150, les interfaces de raccordement 154A-154C et l'ossature de support 152 sont formés intégralement d'un seul tenant, c'est-à-dire monobloc.

Dans un mode de réalisation préféré, l'ensemble du socle 150, des interfaces de raccordement 154A-154C et de l'ossature de support 152 est intégralement réalisé en un matériau prédéterminé et est de préférence formé par une superposition de couches dudit matériau prédéterminé, le matériau prédéterminé étant de préférence de l'aluminium ou un alliage d'aluminium

L'ensemble du socle 150, des interfaces de raccordement 154A-154C et de l'ossature de support 152 est alors fabriqué de préférence par fabrication additive.

Le socle 150 est propre à assurer la fixation du bâti 28 dans l'aéronef 10.

En particulier, le socle 150 est propre à être fixé à une surface intérieure de l'aéronef 10.

La surface intérieure de l'aéronef 10 correspond dans cet exemple à un plancher de l'aéronef 10, en particulier au plancher du cockpit 16 de l'aéronef 10. Alternativement, la surface intérieure de l'aéronef 10 est distincte du plancher, le palonnier 22 étant alors par exemple suspendu.

Pour ce faire, le socle 150 délimite une surface extérieure de fixation 158 du bâti 28 et des orifices de réception 160 d'organes de fixation du socle 150.

Lorsque le bâti 28 est fixé sur la surface intérieure de l'aéronef 10 (ici le plancher), la surface extérieure de fixation 158 du socle 150 est en contact avec ladite surface intérieure de l'aéronef 10 et des organes de fixation du socle 150 sont reçus dans les orifices de réception 160 et sont fixés à la surface intérieure.

De plus, lorsque le bâti 28 est fixé sur la surface intérieure de l'aéronef 10, le socle 150 est notamment interposé entre l'ossature de support 152 et ladite surface intérieure de l'aéronef 10.

La surface extérieure de fixation 158 est par exemple plane.

La surface extérieure de fixation 158 est dans cet exemple parallèle à la direction longitudinale X2.

La direction d'élévation Z2 du bâti 28 est dans cet exemple perpendiculaire à la surface extérieure de fixation 158.

Les orifices de réception 160 d'organes de fixation du socle 150 sont traversants et débouchent sur la surface extérieure de fixation 158.

Dans un mode de réalisation préféré, le socle 150 comprend au moins deux demi-socles 162. Alternativement, le socle 150 est uni.

Les deux demi-socles 162 sont alors séparés et à distance l'un de l'autre.

Les deux demi-socles 162 sont aussi disposés de part et d'autre du plan médian longitudinal du bâti 28.

Les deux demi-socles 162 sont de préférence symétriques l'un de l'autre par rapport au plan médian longitudinal du bâti 28.

Les deux demi-socles 162 s'étendent parallèlement l'un à l'autre.

Chaque demi-socle 162 s'étend en particulier suivant la direction longitudinale X2.

L'ossature de support 152 relie chaque interface de raccordement 154A-154C au socle 150.

L'ossature de support 152 supporte ainsi chaque interface de raccordement 154A-154C.

En particulier, l'ossature de support 152 du bâti 28 est propre à supporter au moins chaque système latéral pédalier 30, la chaîne cinématique mécanique 38, le système de réglage ergonomique 44, le système de restitution d'effort lacet 42 et le système d'acquisition lacet 40, lorsque ces éléments sont présents dans le palonnier 22 et raccordés par l'intermédiaire des interfaces de raccordement 154A-154C respectives.

L'ossature de support 152 est propre à recevoir la charge respective de chacune de ces pièces du palonnier 22 et à transférer cette charge au socle 150. En d'autres termes, l'ossature de support 152 est propre à supporter le poids respectif de chacune de ces pièces du palonnier 22.

L'ossature de support 152 est aussi propre à résister aux différentes actions du pilote sur le palonnier 22 et en particulier sur les pédales 32.

Dans le mode de réalisation illustré sur les figures 9 et 10, l'ossature de support 152 comprend des éléments d'ossature 164 agencés en treillis 166, au moins un des éléments d'ossature 164 s'étendant à partir de chaque interface de raccordement 154A-154C.

La forme de l'ossature 152 en treillis 166 permet une optimisation de la résistance pour une masse maximale autorisée et un encombrement maximal autorisé.

Le treillis 166 s'étend à partir du socle 150 selon la direction d'élévation Z2.

En particulier, au moins deux des éléments d'ossature 164 s'étendent ainsi depuis le socle 150, et, dans le cas où le socle 150 comprenant les deux demi-socles 162, au moins deux des éléments d'ossature 164 s'étendent depuis chaque demi-socle 162.

Le treillis 166 comprend aussi des noeuds 168 au niveau respectivement desquels au moins deux des éléments d'ossature 164 concourent.

Le treillis 166 est élancé dans la direction d'élévation Z2 pour s'adapter à la chaine cinématique mécanique longue du palonnier 22.

Chaque élément d'ossature 164 s'étend suivant une directrice.

Chaque élément d'ossature 164 s'étend suivant la directrice entre deux extrémités.

La directrice de chaque élément d'ossature 164 est par exemple droite ou courbée.

Dans un mode de réalisation de l'invention, chaque élément d'ossature 164 s'étend le long de la directrice depuis un des noeuds 168, une des interfaces de raccordement 154A-154C ou le socle 150, jusqu'à un autre des noeuds 168, une autre des interfaces de raccordement 154A-154C ou le socle 150.

Comme illustré, au moins 50% des éléments d'ossature 164 sont allongés. De préférence, au moins 75%, des éléments d'ossature 164 sont allongés. Avantageusement, tous les éléments d'ossature 164 sont allongés.

Par « élément d'ossature allongé », on entend que l'élément d'ossature est plus long que large.

Dans un mode de réalisation avantageux, au moins 50%, de préférence au moins 75%, des éléments d'ossature 164 présentent respectivement une longueur au moins deux fois, par exemple au moins cinq fois, plus grande que la plus grande dimension transversale.

La « longueur » est ici prise selon la directrice respective de l'élément d'ossature 164 et le terme « transversale » est entendu comme étant perpendiculaire à la directrice.

Par « plus grande dimension transversale », on entend la plus grande distance en ligne droite joignant deux points du contour extérieur de la section transversale de l'élément d'ossature 164.

Comme illustré sur les figures 9 et 10, les directrices respectives d'au moins trois des éléments d'ossature 164 s'étendent hors d'un même plan. En d'autres termes, le treillis 166 est tridimensionnel. Le treillis 166 s'étend ainsi dans les trois directions d'élévation Z2, longitudinale X2 et latérale Y2.

De préférence, chaque élément d'ossature 164 présente une section transversale variable ou constante le long de la directrice de l'élément d'ossature 164.

Avantageusement, chaque élément d'ossature 164 qui s'étend à partir du socle 150 présente une section transversale variable le long de la directrice en s'évasant vers le socle 150.

Chaque élément d'ossature 164 présente par exemple une section transversale tubulaire creuse ou une section transversale en forme de C.

Les éléments d'ossature 164 de l'ossature de support 152 comprennent des éléments d'ossature de soutien 170 et des éléments d'ossature de contreventement 172.

Chaque élément d'ossature de soutien 170 est propre à transmettre au socle 150 la charge d'une des interfaces de raccordement 154A-154C.

Chaque élément d'ossature de soutien 170 a une directrice présentant au moins une composante selon la direction d'élévation Z2.

Pour chaque interface de raccordement 154A-154C, au moins un des éléments d'ossature de soutien 170 s'étend à partir de l'interface de raccordement 154A-154C. L'interface de raccordement 154A-154C forme ainsi une des extrémités de chacun de ses éléments d'ossature de soutien 170.

Chaque élément d'ossature de soutien 170 est propre à supporter le poids de la pièce raccordée au bâti 28 par l'intermédiaire de l'interface de raccordement 154A-154C.

Chaque élément d'ossature de soutien 170 de l'interface de raccordement 154A-154C est alors en particulier arrangé entre le socle 150 et ladite interface de raccordement 154A-154C, en projection dans la direction d'élévation Z2 du bâti 28.

Les éléments d'ossature de contreventement 172 sont propres à stabiliser l'ossature de support 152 vis-à-vis des effets latéraux et/ou longitudinaux issus d'actions sur le bâti 28, notamment de la part du pilote lors de l'actionnement du palonnier 22.

Les éléments d'ossature de contreventement 172 sont propres à stabiliser localement au moins une partie des éléments d'ossature de soutien 170, par exemple relativement aux phénomènes d'instabilité de flambage.

Chaque élément d'ossature de contreventement 172 a une directrice présentant au moins une composante selon la direction longitudinal X2 ou la direction latérale Y2.

Chaque élément d'ossature de contreventement 172 concoure ainsi de préférence avec au moins un des éléments d'ossature de soutien 170 au niveau d'un noeud disposé entre les deux extrémités de l'élément d'ossature de soutien 170.

Les éléments d'ossature de contreventement 172 s'étendent par exemple sensiblement latéralement ou sensiblement longitudinalement.

Dans le treillis 166, certains des éléments d'ossature de contreventement 172 forment avantageusement des croix.

Dans le treillis 166, au moins une partie des éléments d'ossature 164 sont à la fois élément(s) d'ossature de soutien et de contreventement. Ces éléments ont en particulier une directrice présentant au moins une composante selon la direction d'élévation Z2 et au moins une composante selon la direction longitudinal X2 ou la direction latérale Y2.

Dans le treillis 166, au moins 50% des noeuds 168 sont répartis selon un agencement spatial symétrique. L'agencement spatial symétrique présente un plan de symétrie, correspondant de préférence au plan médian longitudinal du bâti 28.

De préférence, au moins 75% des noeuds 168 sont répartis sont répartis selon l'agencement spatial symétrique. Avantageusement, tous les noeuds 168 sont répartis sont répartis selon l'agencement spatial symétrique.

Dans le treillis 166, au moins 50% des éléments d'ossature 164 sont répartis selon un agencement spatial symétrique. L'agencement spatial symétrique présente un plan de symétrie, correspondant de préférence au plan médian longitudinal du bâti 28.

De préférence, au moins 75% des éléments d'ossature 164 sont répartis sont répartis selon l'agencement spatial symétrique. Avantageusement, tous les éléments d'ossature 164 sont répartis sont répartis selon l'agencement spatial symétrique.

Dans le mode de réalisation préféré illustré sur les figures 9 et 10, le treillis 166 comprend deux demi-treillis latéraux 174, respectivement formés par une partie des éléments d'ossature 164.

Les demi-treillis latéraux 174 sont disposés de part et d'autre du plan médian longitudinal du bâti 28.

Les demi-treillis latéraux 174 sont reliés latéralement l'un à l'autre par au moins un des éléments d'ossature de contreventement 172.

Dans l'exemple des figures 9 et 10, les demi-treillis latéraux 174 sont reliés latéralement par des éléments d'ossature de contreventement 172 formant une croix. La croix est de préférence centrée sur le plan médian longitudinal du bâti 28.

Chaque demi-treillis latéral 174 s'étend à partir d'un des demi-socles 162.

Au moins un des éléments d'ossature de soutien 170 de chaque demi-treillis latéral 174 s'étend sensiblement parallèlement au plan médian longitudinal.

Les systèmes de fixation 156 ne sont pas illustrés sur les figures 9 et 10 mais sont visibles sur les figures 2 à 5.

Pour chaque pièce raccordée au bâti 28 par l'intermédiaire d'une des interfaces de raccordement 154A-154C, le système de fixation 156 associé comprend au moins un organe de fixation, de préférence des organes de fixation.

La pièce du palonnier 22 ainsi raccordée appartient à un des systèmes latéraux pédaliers 30, à la chaîne cinématique mécanique 38, au système de réglage ergonomique 44, au système de restitution d'effort lacet 42 ou au système d'acquisition lacet 40.

Le système de fixation 156 associé comprend optionnellement aussi un organe de raccord intermédiaire 176 distinct de la pièce et distinct de l'interface de raccordement 154A-154C, l'organe de raccord intermédiaire 176 étant interposé entre la pièce et l'interface de raccordement 154A-154C.

Lorsque la pièce est raccordée au bâti 28, l'interface de raccordement 154A-154C est en contact avec l'organe de raccord intermédiaire 176 et l'organe de raccord intermédiaire 176 est en contact avec la pièce.

De tels organes de raccord intermédiaires 176 sont par exemple utilisés notamment pour raccorder respectivement la manivelle 48 et le levier 52 aux interfaces de raccordement 154A-154C correspondantes. Chaque organe de raccord intermédiaire 176 définit alors une des liaisons pivot d'articulation correspondantes, l'axe de rotation associé passant par l'organe de raccord intermédiaire 176.

Dans le cas où le système de fixation 156 est dépourvu d'un tel organe de raccord intermédiaire 176, l'interface de raccordement 154A-154C est en contact avec la pièce, lorsque celle-ci est raccordée au bâti 28.

Comme indiqué ci-dessus, chaque interface de raccordement 154A-154C est propre à être raccordée à une autre pièce du palonnier 22.

En d'autres termes, la charge de ladite autre pièce est transmise au socle 150 par l'intermédiaire de l'interface de raccordement 154A-154C associée.

De manière générale, chaque interface de raccordement 154A-154C est mâle ou femelle.

Le caractère mâle ou femelle respectif de chaque interface de raccordement 154A-154C est indépendant du caractère mâle ou femelle respectif de chaque autre interface. En d'autres termes, toutes les interfaces peuvent être femelles (comme illustré dans les figures 9 et 10), toutes les interfaces peuvent être mâles, ou un nombre quelconque non nul des interfaces peuvent être femelles et le restant des interfaces étant mâles.

Ainsi, chaque interface de raccordement 154A-154C est propre à être insérée dans un élément distinct (caractère mâle) ou à recevoir l'élément distinct (caractère femelle) pour raccorder la pièce du palonnier 22 associée au bâti 28.

Plus précisément, ledit élément distinct est par exemple la pièce elle-même, lorsque la pièce est directement fixée à l'interface de raccordement 154A-154C et donc en contact avec l'interface de raccordement 154A-154C. Alternativement, ledit élément est par exemple l'organe de raccord intermédiaire 176 du système de fixation 156, lorsque la pièce est raccordée au bâti 28 par l'intermédiaire de l'organe de raccord intermédiaire 176 et de l'interface de raccordement 154A-154C.

Chaque interface de raccordement mâle 154A-154C comprend une partie en saillie propre à s'insérer dans ledit élément pour raccorder la pièce du palonnier 22 associée au bâti 28.

La partie en saillie est par exemple cylindrique.

Chaque interface de raccordement femelle 154A-154C délimite un logement de réception 178 propre à recevoir ledit élément pour raccorder la pièce du palonnier 22 associée au bâti 28.

Le logement de réception 178 est en creux.

Le logement de réception 178 correspond de préférence à un alésage. En particulier, le logement de réception 178 est traversant.

Le logement de réception 178 est par exemple cylindrique.

En outre, chaque interface de raccordement 154A-154C comprend au moins une région de fixation 180.

La région de fixation 180 délimite au moins un orifice de réception pour chaque organe de fixation du système de fixation 156 associé. Comme illustré sur les figures, la région de fixation 180 délimite de préférence au moins deux orifices de réception d'un organe de fixation, avantageusement au moins trois orifices de réception, mieux au moins quatre orifices de réception.

Lorsque la pièce du palonnier 22 est raccordée au bâti 28 par l'intermédiaire de l'interface de raccordement 154A-154C associée, la région de fixation 180 est en contact avec ladite pièce ou avec l'organe de raccord intermédiaire 176 et des organes de fixation sont reçus dans les orifices de réception en étant aussi fixés à la pièce ou l'organe de raccord intermédiaire 176.

La région de fixation 180 entoure le logement de réception 178 ou la partie en saillie de l'interface de raccordement 154A-154C.

La région de fixation 180 est de préférence plane.

La région de fixation 180 présente un contour extérieur et un contour intérieur.

Le logement de réception 178 ou la partie en saillie s'étend à partir du contour intérieur de la région de fixation 180.

Ainsi, par l'expression « un élément d'ossature s'étend depuis l'interface de raccordement », on entend que l'élément d'ossature 164 s'étend depuis la région de fixation 180, et en particulier depuis le contour extérieur de la région de fixation 180.

Des exemples d'interfaces de raccordement 154A-154C pour pièces du palonnier 22 vont maintenant être décrits.

Dans un mode de réalisation préféré, les interfaces de raccordement 154A-154C comprennent au moins deux interfaces pédales 154A, chaque interface pédale 154A correspondant à une interface de raccordement d'une des structures articulées de support 34 de pédale 32 du palonnier 22. Les deux interfaces pédales 154A sont alors disposées de part et d'autre du plan médian longitudinal du bâti 28.

Ces deux interfaces pédales 154A sont destinées à raccorder respectivement les manivelles 48 des deux structures articulées de support 34 de pédale du palonnier 22.

Dans le mode de réalisation préféré illustré sur les figures, les interfaces de raccordement 154A-154C comprennent au moins quatre interfaces pédales 154A réparties en deux couples d'interfaces pédales 154A.

La répartition spatiale des quatre interfaces pédales 154A est de préférence symétrique par rapport audit plan médian longitudinal.

Ces quatre interfaces pédales 154A sont destinées à raccorder respectivement les manivelles 48 et les leviers 52 des deux structures articulées de support 34 de pédale du palonnier 22.

Chaque couple d'interfaces pédales 154A est propre à être raccordée à la même structure articulée de support 34 de pédale du palonnier 22.

En d'autres termes, chaque couple d'interfaces pédales 154A supporte ensemble le poids de la même structure articulée de support 34 de pédale du palonnier 22 et de la pédale associée à cette structure articulée.

Pour chaque couple, les interfaces pédales 154A du couple sont disposés du même côté du plan médian longitudinal du bâti 28.

Pour chaque interface pédale 154A, le logement de réception 178 (dans le cas d'une interface pédale femelle) ou la partie en saillie (dans le cas d'une interface pédale mâle) est avantageusement cylindrique de révolution.

Le contour intérieur de la région de fixation 180 de chaque interface pédale 154A est circulaire.

De plus, le contour extérieur de la région de fixation 180 de chaque interface pédale 154A est de préférence circulaire.

Une des interfaces pédales 154A du couple forme une interface pédale distale 154A1 et l'autre forme une interface pédale proximale 154A2.

En projection dans la direction longitudinale X2, l'interface pédale distale 154A1 est disposée de manière plus éloignée du siège du pilote que l'interface pédale proximale 154A2.

Dans le couple d'interfaces pédales 154A, l'interface pédale distale 154A1 est propre à être raccordée au levier 52 de la structure articulée de support 34 de pédale associée et l'interface pédale proximale 154A2 du couple est propre à être raccordée à la manivelle 48 de la structure articulée de support 34 de pédale associée.

Lorsque la structure articulée de support 34 de pédale est raccordée au bâti 28, l'axe de rotation A3 du levier 52 par rapport au bâti 28 passe ainsi par l'interface pédale distale 154A1.

Lorsque la structure articulée de support 34 de pédale est raccordée au bâti 28, l'axe de rotation A1 de la manivelle 48 par rapport au bâti 28 passe ainsi par l'interface pédale proximale 154A2.

L'ossature de support 152 est propre à résister aux actions du pilote sur les pédales 32. En particulier, l'ossature de support 152 est propre à résister à un effort d'au moins 100 daN, de préférence d'au moins 130 daN, exercer par l'intermédiaire des interfaces pédales distale et proximale.

En particulier, l'interface pédale distale 154A1 est reliée au socle 150 par deux éléments d'ossature de soutien 170 propre à transmettre au socle 150 la charge portée par l'interface pédale distale 154A1, les deux éléments d'ossature de soutien 170 divergeant à partir de l'interface pédale distale 154A1. Chacun de ces deux éléments d'ossature de soutien 170 s'étend depuis l'interface pédale distale 154A1 jusqu'au socle 150.

En particulier, l'interface pédale distale 154A1 est reliée de la sorte à un des demi-socles 162.

En projection dans la direction longitudinale X2, l'interface pédale distale 154A1 se superpose avec le socle 150. Dans l'exemple des figures 9 et 10, en projection dans la direction longitudinale X2, l'interface pédale distale 154A1 est disposée au milieu longitudinal du socle 150.

L'interface pédale proximale 154A2 est longitudinalement disposée au-delà du socle 150.

L'interface pédale proximale 154A2 fait ainsi saillie hors de l'aplomb du socle 150.

En d'autres termes, en projection dans la direction longitudinale X2, l'interface pédale proximale 154A2 ne se superpose pas avec le socle 150.

De plus, en projection dans la direction longitudinale X2, l'interface pédale proximale 154A2 est disposée à l'écart du socle 150.

L'interface pédale proximale 154A2 est disposée au-dessus de l'interface pédale distale 154A1.

En d'autres termes, en projection dans la direction d'élévation Z2 du bâti 28, l'interface pédale distale 154A1 est disposée entre l'interface pédale proximale 154A2 et le socle 150.

Dans le couple d'interfaces, le diamètre du logement de réception 178 proximale (dans le cas d'une interface pédale proximale femelle) ou de la partie en saillie proximale (dans le cas d'une interface pédale proximale mâle) est par exemple supérieure au diamètre du logement de réception 178 distale (dans le cas d'une interface pédale distale femelle) ou de la partie en saillie distale (dans le cas d'une interface pédale distale mâle).

De préférence, la largeur entre les deux interfaces pédales proximales 154A2 est inférieure à la largeur entre les deux interfaces pédales distales 154A1. Il est ici par exemple question de la largeur entre les régions de fixation des interfaces. La largeur est ici prise selon la direction latérale Y2.

En outre, comme illustré sur les figures 9 et 10, les deux interfaces pédales proximales 154A2 sont avantageusement reliés latéralement par des éléments d'ossature de contreventement 172 formant une croix. La croix est disposée entre les deux interfaces pédales proximales 154A2.

La croix est de préférence centrée sur le plan médian longitudinal du bâti 28.

Dans un mode de réalisation préféré, les interfaces de raccordement 154A-154C comprennent au moins une interface capteur 154B correspondant à une interface de raccordement du système d'acquisition lacet 40 du palonnier 22.

Dans l'exemple des figures 9 et 10, le logement de réception 178 (dans le cas d'une interface capteur femelle) ou la partie en saillie (dans le cas d'une interface capteur mâle) définit un épaulement.

Le logement de réception 178 (dans le cas d'une interface capteur femelle) ou la partie en saillie (dans le cas d'une interface capteur mâle) est avantageusement cylindrique de révolution.

En particulier, le contour intérieur de la région de fixation 180 de l'interface capteur 154B est circulaire.

Comme illustré sur les figures 9 et 10, pour chaque interface pédale 154A, un des éléments d'ossature 164 relie l'interface pédale 154A à l'interface capteur 154B en s'étendant depuis l'interface pédale 154A jusqu'à l'interface capteur 154B.

L'interface capteur 154B est disposée au-dessus de chaque interface pédale distale 154A1.

En d'autres termes, chaque interface pédale distale 154A1 est disposée entre l'interface capteur 154B et le socle 150 en projection selon la direction d'élévation Z2 du bâti 28.

Dans un mode de réalisation préféré, les interfaces de raccordement 154A-154C comprennent au moins une interface de réglage 154C correspondant à une interface de raccordement du système de réglage ergonomique 44 du palonnier 22.

L'interface de réglage 154C est aussi propre à permettre au pilote l'accès à la vis de réglage 96.

Le logement de réception 178 (dans le cas d'une interface de réglage femelle) ou la partie en saillie (dans le cas d'une interface de réglage mâle) est cylindrique oblong. La forme correspondante est ainsi plus longue que large et terminée par deux demi-cylindres.

En particulier, le contour intérieur de la région de fixation 180 de l'interface de réglage 154C est oblong. Le contour intérieur est ainsi plus long que large et présente des angles arrondis.

De plus, le contour extérieur de la région de fixation 180 de l'interface de réglage 154C est de préférence rectangulaire et présente des sommets arrondis.

L'interface de réglage 154C est par exemple centrée sur le plan médian longitudinal du bâti 28.

L'interface de réglage 154C est par exemple longitudinalement disposée au-delà du socle 150.

L'interface de réglage 154C fait ainsi saillie hors de l'aplomb du socle 150.

En d'autres termes, en projection dans la direction longitudinale X2, l'interface de réglage 154C ne se superpose pas avec le socle 150.

En outre, en projection dans la direction longitudinale X2, l'interface de réglage 154C est disposée à l'écart du socle 150.

Comme illustré sur les figures 9 et 10, l'interface de réglage 154C est reliée au socle 150 par au moins deux éléments d'ossature de soutien 170 propre à transmettre au socle 150 la charge portée par l'interface de réglage 154C.

Chacun de ces deux éléments d'ossature de soutien 170 de l'interface de réglage 154C s'étend depuis l'interface de réglage 154C jusqu'au socle 150.

Dans l'exemple préféré illustré, au moins un des éléments d'ossature de soutien 170 de l'interface de réglage 154C relie l'interface de réglage 154C à un premier des deux demi-socles 162 et au moins un autre des éléments d'ossature de soutien 170 de l'interface de réglage 154C relie l'interface de réglage 154C au deuxième des deux demi-socles 162.

Dans l'exemple des figures 9 et 10, chaque élément de soutien 170 de l'interface de réglage 154C s'étend respectivement depuis un des sommets arrondis du contour extérieur de la région de fixation 180 de l'interface de réglage 154C.

Lesdits deux éléments d'ossature de soutien 170 de l'interface de réglage 154C sont alors avantageusement reliés latéralement par des éléments d'ossature de contreventement 172 formant au moins une croix, et dans l'exemple illustré formant au moins deux croix.

Chaque croix est de préférence centrée sur le plan médian longitudinal du bâti 28.

Dans un mode de réalisation, l'interface de réglage 154C est longitudinalement disposée au-delà de l'interface pédale proximale 154A2.

L'interface de réglage 154C est disposée en dessous de chaque interface pédale proximale 154A2.

En d'autres termes, pour chaque interface pédale proximale 154A2, l'interface de réglage 154C est disposée entre l'interface pédale proximale 154A2 et le socle 150 en projection selon la direction d'élévation Z2 du bâti 28.

Dans le mode de réalisation préféré, l'ossature de support 152 délimite aussi un passage fonctionnel central 184. Le passage fonctionnel central 184 est ainsi délimité par les éléments d'ossature 164 du treillis 166.

En particulier, le passage fonctionnel central 184 est délimité latéralement par les deux demi-treillis latéraux 174.

Le passage fonctionnel central 184 s'étend longitudinalement et dans la direction d'élévation Z2.

Le passage fonctionnel central 184 débouche longitudinalement sur l'interface de réglage 154C.

Le passage fonctionnel central 184 est ainsi propre à recevoir au moins la coulisse 88 et le chariot 90 du système de réglage.

Le passage fonctionnel central 184 débouche aussi, dans la direction d'élévation Z2, sur l'interface capteur 154B.

Le passage fonctionnel central 184 est propre à recevoir au moins une partie de la chaine cinématique mécanique du palonnier 22. En particulier, le passage fonctionnel central 184 est par exemple au moins propre à recevoir au moins la pièce centrale de transmission 62 et le mécanisme de transmission 66 joignant la pièce centrale de transmission 62 à l'arbre de sortie 36.

Le passage fonctionnel central 184 autorise le passage d'au moins un cylindre d'un diamètre supérieur ou égal à 100 mm.

Le passage fonctionnel central 184 constitue un espace important au centre du bâti 28 pour accepter la translation du chariot 90 et d'une partie de la chaine cinématique mécanique, avantageusement sur la course de réglage autorisée d'au moins 100 mm.

Le passage fonctionnel central 184 constitue aussi un espace propre à accueillir le motoréducteur de réglage 98.

Dans un mode de réalisation préféré, les interfaces de raccordement 154A-154C comprennent aussi au moins une interface de câblage, non illustrée, correspondant à une interface de raccordement d'un boitier de ségrégation du palonnier 22.

Le boitier de ségrégation du palonnier 22 est propre à centraliser et redistribuer les câbles vers les différents connecteurs.

Un procédé de fabrication du bâti 28 de palonnier 22 décrit ci-dessus va maintenant être décrit. Tout procédé de fabrication peut être envisagé par l'homme du métier.

Dans un mode de réalisation préféré, le procédé de fabrication comprend une étape de fabrication additive de l'ensemble du socle 150, des interfaces de raccordement 154A-154C et de l'ossature de support 152.

De plus, le procédé comprend avantageusement une étape d'application d'un revêtement sur le bâti 28. Cette étape est par exemple une protection par anaphorèse.

Dans le mode de réalisation préféré par fabrication additive, l'ensemble du socle 150, des interfaces de raccordement 154A-154C et de l'ossature de support 152 est formé par une superposition de couches successives, les couches étant déposées les unes sur les autres.

Chaque couche comporte au moins une zone pleine. Éventuellement, chaque couche comporte des zones vides délimitées par des zones pleines adjacentes, en fonction de la forme du socle 150, des interfaces de raccordement 154A-154C et de l'ossature de support 152.

La fabrication additive est particulièrement adaptée à la fabrication du bâti 28 étant donné la forme particulière de l'ossature de support 152. Cette forme présente en effet des angles ou encoches qui seraient difficilement obtenus par moulage (contraintes par la forme du moule) ou fraisage (pas d'espace pour la tête de la machine).

La fabrication additive permet d'assurer les contraintes de raideur et de masse par une fabrication en une seule pièce, malgré une forme élancée, des sections transversales fines et des tolérances serrées.

Dans un mode de réalisation, l'étape de fabrication additive comprend au moins les étapes suivantes :
a) la formation d'une couche de poudre ;
b) une fusion sélective d'au moins une région de la couche de poudre ;
c) une répétition des étapes a) et b) de manière à former l'ensemble du socle 150, des interfaces de raccordement 154A-154C et de l'ossature de support 152.

L'étape de fabrication additive est par exemple mise en oeuvre par un appareil de fabrication comportant au moins une surface de support, un dispositif de formation de couches successives de poudre sur la surface de support, un dispositif de fusion sélective de la poudre, et un système de déplacement relatif du dispositif de fusion sélective par rapport à la surface de support.

L'appareil de fabrication comporte également une unité de commande du dispositif de formation, du dispositif de fusion sélective, et du système de déplacement.

Au cours de l'étape a), chaque couche de poudre formée est plane.

Chaque couche de poudre est dépourvue de relief macroscopique de hauteur supérieure à 4 fois l'épaisseur moyenne de la couche.

La poudre est par exemple une poudre métallique. La poudre métallique est de préférence une poudre d'aluminium ou d'alliage d'aluminium.

L'étape a) est notamment mise en oeuvre par le dispositif de formation et l'unité de commande commandant le dispositif de formation.

Au cours de l'étape b), chaque zone pleine et chaque éventuelle zone vide de la couche est/sont formée(s).

Au cours de l'étape b), la poudre métallique est menée jusqu'à son point de fusion.

L'étape b) est notamment mise en oeuvre par le dispositif de fusion sélective, le système de déplacement et le l'unité de commande commandant le dispositif de fusion sélective et le système de déplacement.

Dans un mode de réalisation avantageux, la fabrication additive est par fusion sélective par laser, en anglais LBM (de l'acronyme anglais "Laser Beam Melting").

Le dispositif de fusion sélective comprend alors un laser propre à faire fondre et fusionner la poudre métallique de la couche formée à l'étape a) précédente avec les couches précédentes.

Au cours de l'étape b), l'unité de commande calcule, par exemple à partir d'une maquette numérique du bâti 28, la disposition spatiale de chaque zone à irradier au sein de la couche de poudre formée à l'étape a) précédente pour former le socle 150, les interfaces de raccordement 154A-154C et l'ossature de support 152.

Sur cette base, le système de déplacement est commandé par l'unité de commande pour positionner le laser du dispositif de fusion sélective par rapport à la couche formée à l'étape a) précédente pour irradier chaque zone à former de la couche.

Une méthode d'assemblage d'un palonnier 22 va maintenant être décrite.

La méthode comprend la fourniture d'un bâti 28 tel que décrit ci-dessus. Le bâti 28 est avantageusement obtenu à partir du procédé de fabrication décrit ci-dessus.

La méthode comprend en outre la fourniture d'au moins une pièce du palonnier 22.

La méthode comprend alors, pour chaque pièce du palonnier 22, le raccordement de la pièce à au moins une des interfaces de raccordement 154A-154C du bâti 28.

Grâce aux caractéristiques précédemment décrites, le bâti 28 répond aux besoins définis ci-dessus pour le bâti 28 seul. En particulier, le bâti 28 est suffisamment compact pour respecter l'encombrement alloué, et assez léger pour ne pas dépasser l'allocation massique du palonnier 22.

De plus, le bâti 28 permet ainsi une fixation au plancher de l'aéronef 10 pour améliorer les conditions de montage et donc la sécurité.

Dans ce qui précède, il est clair pour l'homme du métier que, pour chaque pédale 32, la pédale 32 est raccordée à la bielle de support 54 par la liaison pivot de freinage 110 ; et que la pédale 32 est propre à être mise en rotation par rapport à la bielle de support 54 autour de l'axe de rotation A9 passant par ladite liaison pivot de freinage 110.

De plus, dans tout ce qui précède, pour le freinage, lorsqu'il est question d'un déplacement de la pédale 32 par rapport à la manivelle 48 autour de l'axe de rotation A9, on comprend qu'il s'agit aussi d'un déplacement de la pédale 32 par rapport à la bielle de support 54 autour de l'axe de rotation A9.

En particulier, la manivelle 48 et la bielle de support 54 sont propres à être immobiles l'une par rapport à l'autre, lors de la rotation de la pédale 32 par rapport à la bielle de support 54 et par rapport à la manivelle 48 autour de l'axe de rotation A9 passant par ladite liaison pivot de freinage 110.

Par exemple, le système d'acquisition de freinage 112 est configuré pour générer un signal électrique représentatif d'un déplacement de la pédale 32 par rapport à la bielle de support 54 autour de l'axe de rotation A9.

## Revendications

1. Bâti (28) de palonnier (22) comprenant un socle (150), une ossature de support (152) et des interfaces de raccordement (154A, 154B, 154C), chaque interface de raccordement (154A, 154B, 154C) étant propre à raccorder une autre pièce du palonnier (22) au bâti (28),
l'ossature de support (152) reliant chaque interface de raccordement (154A, 154B, 154C) au socle (150), l'ossature de support (152) comprenant des éléments d'ossature (164) agencés en treillis (166), au moins un des éléments d'ossature (164) s'étendant à partir de chaque interface de raccordement (154A, 154B, 154C).

2. Bâti (28) selon la revendication 1, dans lequel le treillis (166) comprend des noeuds (168) au niveau respectivement desquels au moins deux des éléments d'ossature (164) concourent, chaque élément d'ossature s'étendant le long d'une directrice depuis un des noeuds (168), une des interfaces de raccordement (154A, 154B, 154C) ou le socle (150), jusqu'à un autre des noeuds (168), une autre des interfaces de raccordement (154A, 154B, 154C) ou le socle (150).

3. Bâti (28) selon la revendication 2, dans lequel les éléments d'ossature (164) de l'ossature de support (152) comprennent des éléments d'ossature de soutien (170) et des éléments d'ossature de contreventement (172) ;
chaque élément d'ossature de soutien (170) s'étendant le long de la directrice entre deux extrémités, et, pour chaque interface de raccordement (154A, 154B, 154C), au moins un des éléments d'ossature de soutien (170) s'étendant à partir de l'interface de raccordement (154A, 154B, 154C) et transmettant au socle (150) la charge de l'interface de raccordement (154A, 154B, 154C) ; et
chaque élément d'ossature de contreventement (172) concourant avec au moins un des éléments d'ossature de soutien (170) au niveau d'un noeud disposé entre les deux extrémités de l'élément d'ossature de soutien (170).

4. Bâti (28) selon la revendication 3, dans lequel le treillis (166) comprend deux demi-treillis latéraux (174), les demi-treillis latéraux (174) étant respectivement formés par une partie des éléments d'ossature (164) et étant disposés de part et d'autre d'un plan médian longitudinal du bâti (28), les demi-treillis latéraux (174) étant reliés latéralement l'un à l'autre par au moins un des éléments d'ossature de contreventement (172).

5. Bâti (28) selon l'une quelconque des revendications précédentes, dans lequel le socle (150) comprend au moins deux demi-socles (162), les deux demi-socles (162) étant séparés et à distance l'un de l'autre, demi-socles (162) étant disposés de part et d'autre d'un plan médian longitudinal du bâti (28).

6. Bâti (28) selon l'une quelconque des revendications précédentes, dans lequel au moins 50%, de préférence au moins 75%, des éléments d'ossature (164) sont allongés.

7. Bâti (28) selon l'une quelconque des revendications précédentes, dans lequel le treillis (166) comprend des noeuds (168) au niveau respectivement desquels au moins deux des éléments d'ossature (164) concourent ; et, dans le treillis (166), au moins 50%, de préférence au moins 75%, des noeuds (168) sont répartis selon un agencement spatial symétrique, l'agencement spatial symétrique présentant un plan de symétrie correspondant de préférence à un plan médian longitudinal du bâti (28).

8. Bâti (28) selon l'une quelconque des revendications précédentes, dans lequel chaque interface de raccordement (154A, 154B, 154C) est mâle ou femelle, chaque interface de raccordement (154A, 154B, 154C) étant propre à être insérée dans un élément distinct ou propre à recevoir un élément distinct pour raccorder la pièce du palonnier (22) associée au bâti (28).

9. Bâti (28) selon l'une quelconque des revendications précédentes, dans lequel chaque interface de raccordement (154A, 154B, 154C) comprend au moins une région de fixation (180), la région de fixation (180) délimitant au moins un orifice de réception (182) d'un organe de fixation.

10. Bâti (28) selon l'une quelconque des revendications précédentes, dans lequel le socle (150), les interfaces de raccordement (154A, 154B, 154C) et l'ossature de support (152) sont formés d'un seul tenant, l'ensemble du socle (150), des interfaces de raccordement (154A, 154B, 154C) et de l'ossature de support (152) étant intégralement réalisé en un matériau prédéterminé et étant de préférence formé par une superposition de couches dudit matériau prédéterminé, le matériau prédéterminé étant avantageusement de l'aluminium ou un alliage d'aluminium.

11. Bâti (28) selon l'une quelconque des revendications précédentes, dans lequel les interfaces de raccordement (154A, 154B, 154C) comprennent au moins deux interfaces pédales (154A), chaque interface pédale (154A) correspondant à une interface de raccordement d'une structure articulée de support (34) de pédale (32) du palonnier (22), les deux interfaces pédales (154A) étant disposées de part et d'autre du plan médian longitudinal du bâti (28).

12. Bâti (28) selon la revendication 11, dans lequel les interfaces de raccordement (154A, 154B, 154C) comprennent au moins une interface capteur (154B) correspondant à une interface de raccordement d'un système d'acquisition lacet (40) du palonnier (22) configuré pour générer un signal électrique représentatif du déplacement de pédales (32) du palonnier (22) par rapport au bâti (28) ; et, pour au moins une des interfaces pédales (154A), un des éléments d'ossature (164) relie de préférence ladite interface pédale (154A) à l'interface capteur (154B) en s'étendant depuis ladite interface pédale (154A) jusqu'à l'interface capteur (154B).

13. Bâti (28) selon l'une quelconque des revendications précédentes, dans lequel les interfaces de raccordement (154A, 154B, 154C) comprennent au moins une interface de réglage (154C) correspondant à une interface de raccordement d'un système de réglage ergonomique (44) d'une position d'utilisation de pédales (32) du palonnier (22).

14. Bâti (28) selon la revendication 13, dans lequel l'interface de réglage (154C) fait saillie hors de l'aplomb du socle (150), l'interface de réglage (154C) étant reliée au socle (150) par au moins deux éléments d'ossature de soutien (170) propre à transmettre au socle (150) la charge portée par l'interface de réglage (154C).

15. Bâti (28) selon l'une quelconque des revendications précédentes, dans lequel l'ossature de support (152) délimite un passage fonctionnel central (184), ledit passage fonctionnel central (184) autorisant le passage d'au moins un cylindre d'un diamètre supérieur ou égal à 100 mm.

16. Procédé de fabrication d'un bâti (28) selon l'une quelconque des revendications précédentes, comprenant une étape de fabrication additive de l'ossature de support (152) du bâti (28), avantageusement par fusion sélective par laser.

## Revendications modifiées

### Revendications modifiées conformément à la règle 137(2) CBE.

1. Bâti (28) de palonnier (22) comprenant un socle (150), une ossature de support (152) et des interfaces de raccordement (154A, 154B, 154C), chaque interface de raccordement (154A, 154B, 154C) étant propre à raccorder une autre pièce du palonnier (22) au bâti (28),
l'ossature de support (152) reliant chaque interface de raccordement (154A, 154B, 154C) au socle (150), l'ossature de support (152) comprenant des éléments d'ossature (164) agencés en treillis (166), au moins un des éléments d'ossature (164) s'étendant à partir de chaque interface de raccordement (154A, 154B, 154C), chaque élément d'ossature (164) s'étendant suivant une directrice, la directrice d'au moins un des éléments d'ossature (164) étant courbée.

2. Bâti (28) selon la revendication 1, dans lequel le treillis (166) comprend des noeuds (168) au niveau respectivement desquels au moins deux des éléments d'ossature (164) concourent, chaque élément d'ossature s'étendant le long d'une directrice depuis un des noeuds (168), une des interfaces de raccordement (154A, 154B, 154C) ou le socle (150), jusqu'à un autre des noeuds (168), une autre des interfaces de raccordement (154A, 154B, 154C) ou le socle (150).

3. Bâti (28) selon la revendication 2, dans lequel les éléments d'ossature (164) de l'ossature de support (152) comprennent des éléments d'ossature de soutien (170) et des éléments d'ossature de contreventement (172) ;
chaque élément d'ossature de soutien (170) s'étendant le long de la directrice entre deux extrémités, et, pour chaque interface de raccordement (154A, 154B, 154C), au moins un des éléments d'ossature de soutien (170) s'étendant à partir de l'interface de raccordement (154A, 154B, 154C) et transmettant au socle (150) la charge de l'interface de raccordement (154A, 154B, 154C) ; et
chaque élément d'ossature de contreventement (172) concourant avec au moins un des éléments d'ossature de soutien (170) au niveau d'un noeud disposé entre les deux extrémités de l'élément d'ossature de soutien (170).

4. Bâti (28) selon la revendication 3, dans lequel le treillis (166) comprend deux demi-treillis latéraux (174), les demi-treillis latéraux (174) étant respectivement formés par une partie des éléments d'ossature (164) et étant disposés de part et d'autre d'un plan médian longitudinal du bâti (28), les demi-treillis latéraux (174) étant reliés latéralement l'un à l'autre par au moins un des éléments d'ossature de contreventement (172).

5. Bâti (28) selon l'une quelconque des revendications précédentes, dans lequel le socle (150) comprend au moins deux demi-socles (162), les deux demi-socles (162) étant séparés et à distance l'un de l'autre, demi-socles (162) étant disposés de part et d'autre d'un plan médian longitudinal du bâti (28).

6. Bâti (28) selon l'une quelconque des revendications précédentes, dans lequel au moins 50%, de préférence au moins 75%, des éléments d'ossature (164) sont allongés.

7. Bâti (28) selon l'une quelconque des revendications précédentes, dans lequel le treillis (166) comprend des noeuds (168) au niveau respectivement desquels au moins deux des éléments d'ossature (164) concourent ; et, dans le treillis (166), au moins 50%, de préférence au moins 75%, des noeuds (168) sont répartis selon un agencement spatial symétrique, l'agencement spatial symétrique présentant un plan de symétrie correspondant de préférence à un plan médian longitudinal du bâti (28).

8. Bâti (28) selon l'une quelconque des revendications précédentes, dans lequel chaque interface de raccordement (154A, 154B, 154C) est mâle ou femelle, chaque interface de raccordement (154A, 154B, 154C) étant propre à être insérée dans un élément distinct ou propre à recevoir un élément distinct pour raccorder la pièce du palonnier (22) associée au bâti (28).

9. Bâti (28) selon l'une quelconque des revendications précédentes, dans lequel chaque interface de raccordement (154A, 154B, 154C) comprend au moins une région de fixation (180), la région de fixation (180) délimitant au moins un orifice de réception (182) d'un organe de fixation.

10. Bâti (28) selon l'une quelconque des revendications précédentes, dans lequel le socle (150), les interfaces de raccordement (154A, 154B, 154C) et l'ossature de support (152) sont formés d'un seul tenant, l'ensemble du socle (150), des interfaces de raccordement (154A, 154B, 154C) et de l'ossature de support (152) étant intégralement réalisé en un matériau prédéterminé et étant de préférence formé par une superposition de couches dudit matériau prédéterminé, le matériau prédéterminé étant avantageusement de l'aluminium ou un alliage d'aluminium.

11. Bâti (28) selon l'une quelconque des revendications précédentes, dans lequel les interfaces de raccordement (154A, 154B, 154C) comprennent au moins deux interfaces pédales (154A), chaque interface pédale (154A) correspondant à une interface de raccordement d'une structure articulée de support (34) de pédale (32) du palonnier (22), les deux interfaces pédales (154A) étant disposées de part et d'autre du plan médian longitudinal du bâti (28).

12. Bâti (28) selon la revendication 11, dans lequel les interfaces de raccordement (154A, 154B, 154C) comprennent au moins une interface capteur (154B) correspondant à une interface de raccordement d'un système d'acquisition lacet (40) du palonnier (22) configuré pour générer un signal électrique représentatif du déplacement de pédales (32) du palonnier (22) par rapport au bâti (28) ; et, pour au moins une des interfaces pédales (154A), un des éléments d'ossature (164) relie de préférence ladite interface pédale (154A) à l'interface capteur (154B) en s'étendant depuis ladite interface pédale (154A) jusqu'à l'interface capteur (154B).

13. Bâti (28) selon l'une quelconque des revendications précédentes, dans lequel les interfaces de raccordement (154A, 154B, 154C) comprennent au moins une interface de réglage (154C) correspondant à une interface de raccordement d'un système de réglage ergonomique (44) d'une position d'utilisation de pédales (32) du palonnier (22).

14. Bâti (28) selon la revendication 13, dans lequel l'interface de réglage (154C) fait saillie hors de l'aplomb du socle (150), l'interface de réglage (154C) étant reliée au socle (150) par au moins deux éléments d'ossature de soutien (170) propre à transmettre au socle (150) la charge portée par l'interface de réglage (154C).

15. Bâti (28) selon l'une quelconque des revendications précédentes, dans lequel l'ossature de support (152) délimite un passage fonctionnel central (184), ledit passage fonctionnel central (184) autorisant le passage d'au moins un cylindre d'un diamètre supérieur ou égal à 100 mm.

16. Procédé de fabrication d'un bâti (28) selon l'une quelconque des revendications précédentes, comprenant une étape de fabrication additive de l'ossature de support (152) du bâti (28), avantageusement par fusion sélective par laser.
